# EUROPEAN PATENT APPLICATION

(11) **EP 4 834 633 A1**
(43) Date of publication of application: **04.11.2026**
(21) Application number: 24911919.9
(22) Date of filing: 08.10.2024
(51) Int. Cl.: B60K 28/00, B60K 1/04, B60K 8/00, B60K 15/01, B60L 15/20, B60L 50/70, B60L 58/30, H01M 8/04

(54) **WORK MACHINE, WORK VEHICLE, AND TANK UNIT**

(30) Priority: 26.12.2023 JP 2023219114; 26.12.2023 JP 2023219244
(71) Applicant: KUBOTA CORPORATION, Osaka-shi, Osaka 530-0011 (JP)
(72) Inventor: YAMAGUCHI, Yasuyoshi, Sakai-shi, Osaka 590-0908 (JP); TAKAKI, Takahiro, Sakai-shi, Osaka 590-0908 (JP)
(74) Representative: Cabinet Beau de Loménie
(86) International application number: PCT/JP2024/035984
(87) International publication number: WO 2025/142025

(57) **Abstract**

A work machine includes: a vehicle main body capable of travel; a tank 13 installed on the vehicle main body; a fuel cell 24 installed on the vehicle main body and configured to generate electric power using hydrogen supplied from the tank 13; a valve 60 capable of shutting off supply of hydrogen from the tank 13 to the fuel cell 24; and a detection device 80 disposed on the vehicle main body. The vehicle main body travels based on detection information of the detection device 80. The valve 60 is closed in response to a determination that the vehicle main body is under a dangerous travel condition obtained from the detection information.

## Description

### TECHNICAL FIELD

The present invention relates to a work machine, a work vehicle, and a tank unit.

The present application claims priority to Japanese Patent Application No. 2023-219114 filed on December 26, 2023, the entire disclosure of which is hereby incorporated by reference.

The present application claims priority to Japanese Patent Application No. 2023-219244 filed on December 26, 2023, the entire disclosure of which is hereby incorporated by reference.

### BACKGROUND ART

From the viewpoint of environmental protection, a work machine including a fuel cell has been proposed (see, for example, Patent Literature 1). This work machine is driven by a motor that rotates using electric power generated by the fuel cell. Hydrogen is used as fuel for the fuel cell. Patent Literature 1 discloses a tractor as an example of a work machine, and a tank is installed on a vehicle main body of the tractor.

Patent Literature 2 describes a fuel cell system including: a hydrogen tank configured to supply hydrogen to a fuel cell; a main shutoff valve disposed on the hydrogen tank and configured to switch between an open state in which the main shutoff valve allows the supply of hydrogen and a closed state in which the main shutoff valve stops the supply of hydrogen; and an atmospheric pressure sensor configured to measure an atmospheric pressure to control the supply of hydrogen to the fuel cell.

The fuel cell system of Patent Literature 2 detects a collision of the vehicle with an obstacle, based on a measurement result of the atmospheric pressure sensor with driving wheels locked and the main shutoff valve being open, and performs control to close the main shutoff valve when the collision is detected.

### CITATION LIST

### [PATENT LITERATURE]

PATENT LITERATURE 1: Japanese Laid-Open Patent Publication No. 2023-13186
PATENT LITERATURE 2: Japanese Laid-Open Patent Publication No. 2017-54711

### SUMMARY OF THE INVENTION

A work machine according to an embodiment of the present invention includes: a vehicle main body capable of travel; a tank installed on the vehicle main body; a fuel cell installed on the vehicle main body and configured to generate electric power using hydrogen supplied from the tank; a valve capable of shutting off supply of hydrogen from the tank to the fuel cell; and a detection device disposed on the vehicle main body, the vehicle main body travels based on detection information of the detection device, and the valve is closed in response to a determination that the vehicle main body is under a dangerous travel condition obtained from the detection information.

A work vehicle according to an aspect of the present invention is a work vehicle including: a vehicle body; a fuel cell installed on the vehicle body; and a tank unit including a tank capable of storing fuel, wherein the tank unit includes: a casing accommodating the tank; and an impact sensor capable of detecting an impact applied to the casing.

A tank unit according to an aspect of the present invention is a tank unit disposed on a work vehicle including a fuel cell serving as a drive source, the tank unit including: a tank capable of being filled with fuel to be supplied to the fuel cell; a casing accommodating the tank; and an impact sensor capable of detecting an impact applied to the casing.

### BRIEF DESCRIPTION OF DRAWINGS

[FIG. 1] FIG. 1 is a perspective view illustrating an example of an overall structure of a work machine in Chapter 1.
[FIG. 2] FIG. 2 is a right side view of the work machine from which some exterior components are removed in Chapter 1.
[FIG. 3] FIG. 3 is a perspective view illustrating an example of an internal structure of a work vehicle in Chapter 1.
[FIG. 4] FIG. 4 is a block diagram illustrating a part of a functional configuration of the work vehicle in Chapter 1.
[FIG. 5] FIG. 5 is a flowchart illustrating action of the work vehicle in Chapter 1.
[FIG. 6] FIG. 6 is an explanatory diagram illustrating a state in which the work vehicle travels on a road by automated driving in Chapter 1.
[FIG. 7] FIG. 7 is an explanatory diagram of a target route when automated driving is performed within an agricultural field in Chapter 1.
[FIG. 8] FIG. 8 is a flowchart illustrating an example of control for automated driving in Chapter 1.
[FIG. 9] FIG. 9 is an explanatory diagram of the work vehicle traveling by automated driving in Chapter 1.
[FIG. 10] FIG. 10 is a perspective view of a work vehicle in Chapter 2.
[FIG. 11] FIG. 11 is a right side view of the work vehicle from which some exterior components are removed in Chapter 2.
[FIG. 12] FIG. 12 is a perspective view illustrating an example of an internal structure of the work vehicle in Chapter 2.
[FIG. 13] FIG. 13 is a block diagram illustrating an example of a functional configuration of the work vehicle in Chapter 2.
[FIG. 14] FIG. 14 is a block diagram illustrating an example of an internal configuration of a tank unit in Chapter 2.
[FIG. 15] FIG. 15 is an explanatory diagram illustrating an example of a tow type work vehicle in Chapter 2.

### DETAILED DESCRIPTION

### <Chapter 1>

### <Problem to be solved by the present invention>

In a work machine such as those described above, measures for preventing leakage of hydrogen as fuel are indispensable not only when the work machine travels normally, but also when the work machine is in a dangerous situation, for example, when the work machine collides with an obstacle or when the work machine overturns on an access route to a work site such as an agricultural field.

Hence, the present disclosure provides a work machine capable of preventing leakage of hydrogen gas in a dangerous situation.

### <Advantageous effect of the present disclosure>

According to a work machine of the present disclosure, it is possible to prevent leakage of hydrogen gas in a dangerous situation.

### <Outline of embodiments of the present disclosure>

An outline of below-listed embodiments of the invention of the present disclosure is described.
(1) A work machine of the present embodiment includes: a vehicle main body capable of travel; a tank installed on the vehicle main body; a fuel cell; a valve capable of shutting off a supply path from the tank to the fuel cell; and a detection device disposed on the vehicle main body, the vehicle main body travels based on detection information of the detection device, and the valve is closed in response to a determination that the vehicle main body is under a dangerous travel condition obtained from the detection information.

According to the work machine, while the vehicle main body travels based on detection information of the detection device, the detection information detected by the detection device is used to determine whether the vehicle main body is under a dangerous travel condition. When the vehicle main body is under the dangerous travel condition, the valve is closed to shut off supply of hydrogen gas from the tank, thereby preventing leakage of hydrogen gas.

(2) In the work machine described in (1), the detection device is capable of detecting an obstacle around the vehicle main body, when a distance between a position of the obstacle detected by the detection device and a position of the vehicle main body is less than or equal to a predetermined distance, the vehicle main body performs action to avoid the obstacle or action to stop traveling, and when the distance between the position of the obstacle and the position of the vehicle main body is less than or equal to the predetermined distance, the valve is closed on a basis that the vehicle main body is under the dangerous travel condition.

According to this configuration, an obstacle around the work machine is detected by the detection device while the work machine is traveling. The valve is closed when there is a possibility of a collision with the obstacle. It is therefore possible to shut off supply of hydrogen gas from the tank before a collision.

(3) In the work machine described in (1) or (2), the detection device includes at least one of a light detection and ranging (LiDAR) sensor, a millimeter-wave radar, and an ultrasonic sensor, and the valve is closed based on the detection information detected by at least one of the LiDAR sensor, the millimeter-wave radar, and the ultrasonic sensor.
(4) In the work machine described in any one of (1) to (3), the valve is switched from a closed state to an open state in response to a signal acquired from an operating device operated by a user.

According to this configuration, once the safety of the work vehicle is confirmed, the work machine can be returned to a state before being determined that the vehicle main body is under the dangerous travel condition, based on user operation.

(5) In the work machine described in (4), when the valve is switched from the closed state to the open state, the vehicle main body stops action to avoid the obstacle or action to stop traveling.

According to this configuration, once the safety of the work vehicle is confirmed, the work machine can be returned to a state before being determined that the vehicle main body is under the dangerous travel condition, based on user operation.

(6) The work machine described in any one of (1) to (5) includes a tank unit including the tank and a support member supporting the tank, and the valve is disposed on the tank unit.

### <Details of embodiments of the present disclosure>

Details of embodiments of the present disclosure are described below with reference to the drawings. It should be noted that at least some of the embodiments described below may be arbitrarily combined with each other.

### [Overall structure of work machine]

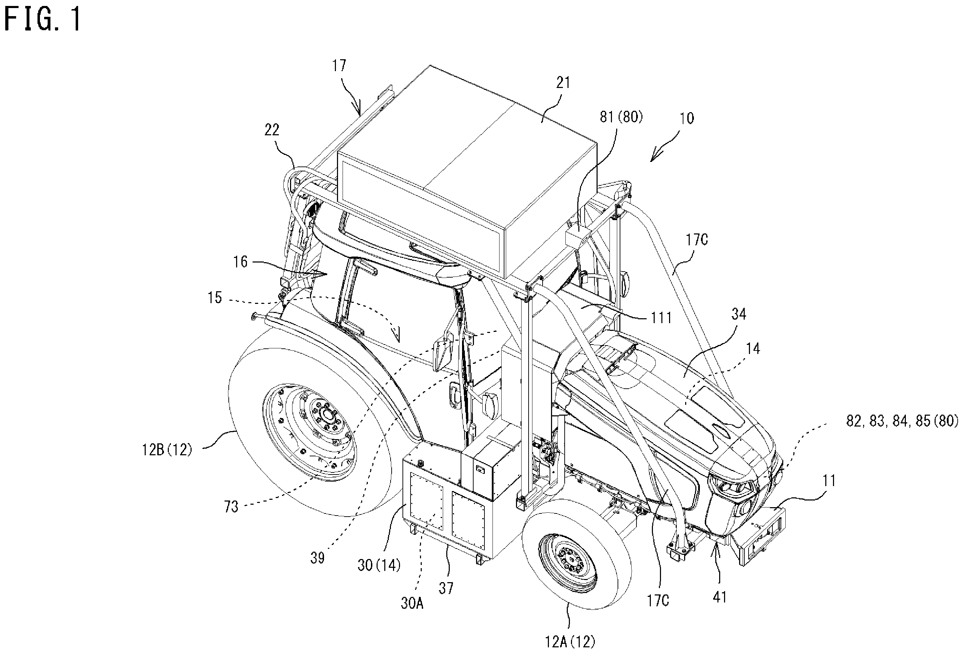

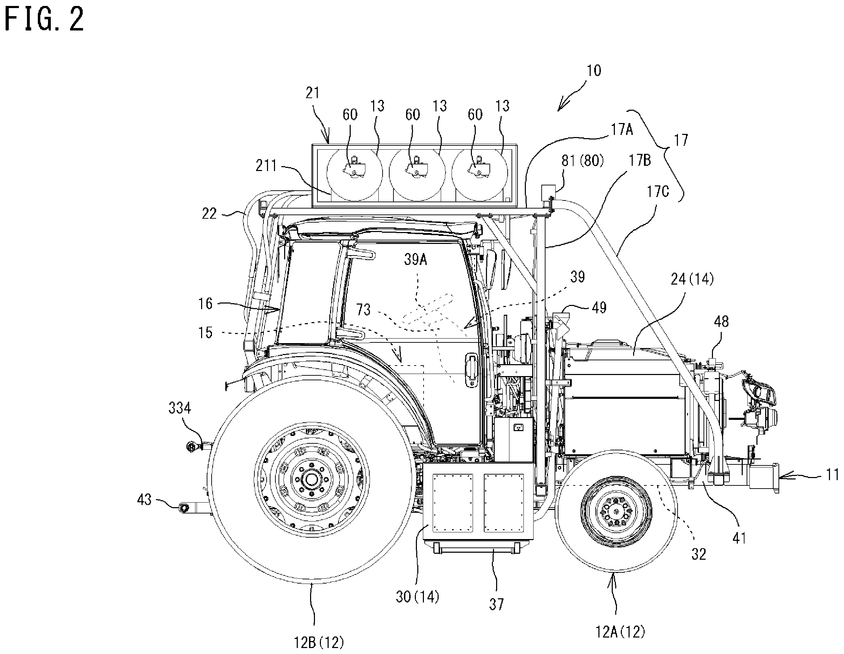

FIG. 1 is a perspective view illustrating an example of an overall structure of a work machine. FIG. 2 is a right side view of the work machine from which some exterior components (such as a hood 34 and a cover 111) are removed.

The work machine of the present embodiment is a work vehicle for use in farmwork, and is specifically a tractor. The work machine is not limited to a tractor, and may be a movable body such as a construction machine or a utility vehicle. In the following, a description is given of a case where the work machine is a work vehicle (tractor) 10.

Directions of the work vehicle 10 are defined. The work vehicle 10 includes a driver's seat 15. The front, rear, left, right, upper, and lower sides of the work vehicle 10 are defined with respect to a driver sitting in the driver's seat 15. That is, the "front" side is directed forward of the driver, and the "rear" side is directed rearward of the driver. In addition, the "right" side is directed rightward of the driver, and the "left" side is directed leftward of the driver. A front-rear direction and a left-right direction are parallel to the ground, and are perpendicular to each other. An up-down direction is perpendicular to both the front-rear direction and the left-right direction.

In the following description, the left-right direction may also be referred to as a "vehicle width direction". The front direction corresponds to a "traveling direction" of the work vehicle 10.

If the work vehicle 10 does not include the driver's seat 15, the "front" side is directed forward with the work vehicle 10 traveling in a work progression direction, and the "rear" side is directed rearward with the work vehicle 10 traveling in the opposite direction to the work progression direction. The "right" side is directed rightward with the work vehicle 10 traveling in the work progression direction, and the "left" side is directed leftward with the work vehicle 10 traveling in the work progression direction.

The work vehicle 10 includes a vehicle main body 11 including a chassis 41, a drive device 14, a steering device 39, the driver's seat 15, and a cabin 16. The vehicle main body 11 further includes the hood 34, the cover 111, a tank unit 21, a first radiator 48, and a second radiator 49.

The cabin 16 is a driver's cab partitioned by front pillars, rear pillars, and a roof. The work vehicle 10 may include, in place of the cabin 16, a canopy or a rollover protective structure (ROPS). If the work vehicle 10 does not include the cabin 16, the tank unit 21 is disposed above the driver's seat 15 by an installation frame 17.

As illustrated in FIG. 2, the first radiator 48, a fuel cell 24, and the second radiator 49 are installed on a front portion of the chassis 41 with the first radiator 48, the fuel cell 24, and the second radiator 49 arranged in this order from the front side to the rear side. The first radiator 48 and the fuel cell 24 are covered with the hood 34, and the second radiator 49 is covered with the cover 111.

The tank unit 21 (see FIG. 2) includes a tank 13 configured to store fuel. The fuel is in a liquid or gaseous state, and examples of the fuel include hydrogen, methane, carbon monoxide (CO), and the like. In this embodiment, the tank 13 stores hydrogen gas. The tank unit 21 of the present embodiment includes a plurality of the tanks 13. The drive device 14 is driven using the stored fuel. The work vehicle 10 is a fuel cell vehicle (FCV), and travels using, as an energy source, electric power generated by the fuel cell 24 through a chemical reaction between hydrogen and oxygen.

The tank unit 21 includes a support member 211 supporting the tank 13. The tank unit 21 is provided with a safety valve 60 (described later). The safety valve 60 is capable of shutting off supply of hydrogen from the tank 13 to the fuel cell 24.

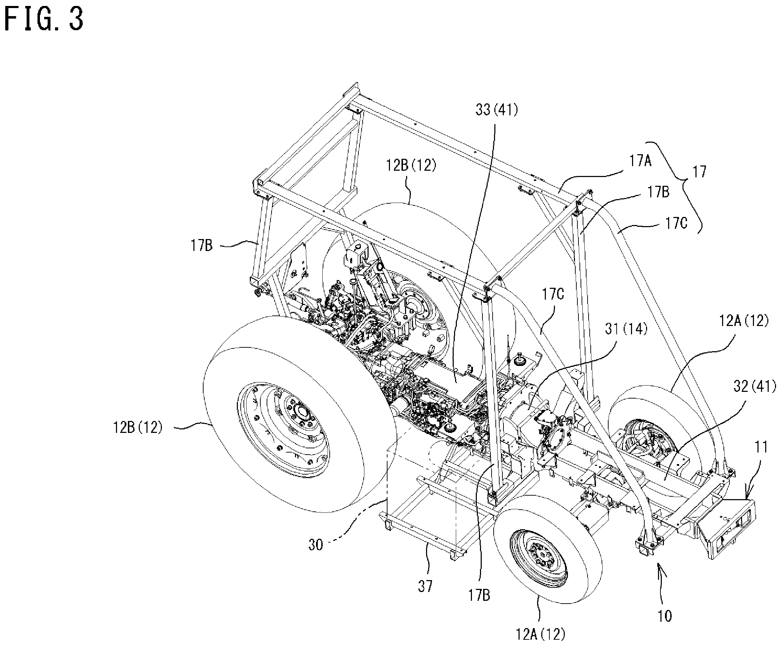

The drive device 14 includes the fuel cell 24, a battery unit 30, and a motor 31 (see FIG. 3). FIG. 3 is a perspective view illustrating an example of an internal structure of the work vehicle 10. The battery unit 30 includes a battery pack (battery) configured to store electric power generated by the fuel cell 24.

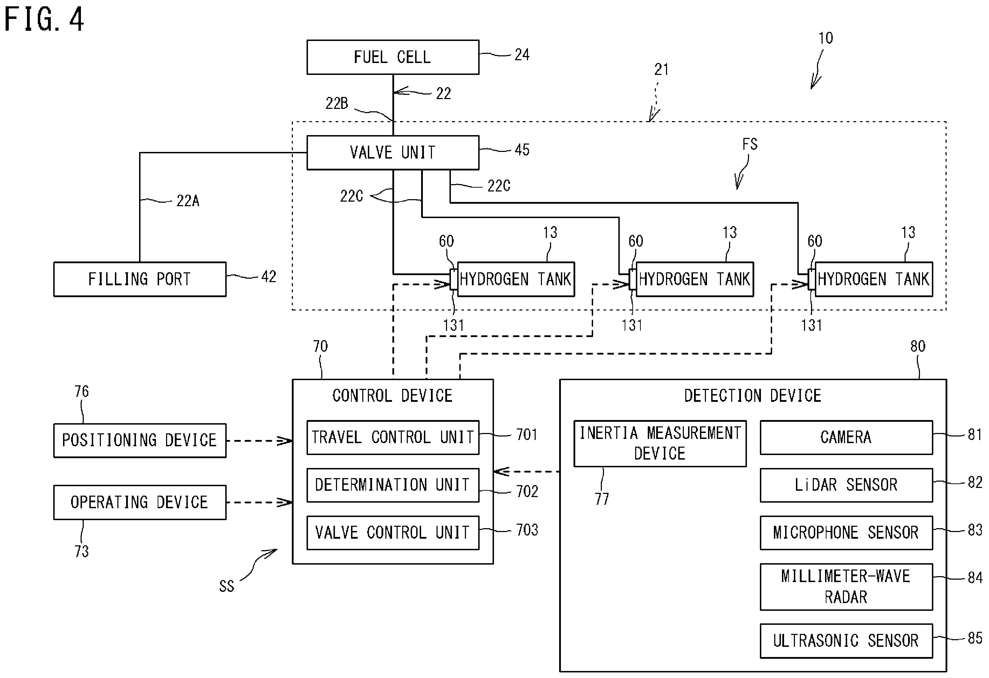

The work vehicle 10 includes a pipe 22 for hydrogen gas. The tank 13 is filled with hydrogen gas supplied thereto through a filling port 42 (see FIG. 4) connected to an end of the pipe 22. The hydrogen gas in the tank 13 is supplied to the fuel cell 24 through the pipe 22.

The steering device 39 (see FIG. 2) includes a steering shaft rotatable by a steering wheel 39A. The steering device 39 changes a rolling direction of wheels (front wheels 12A) to change a traveling direction of the work vehicle 10. The steering device 39 includes an assist mechanism (power steering device). The assist mechanism hydraulically or electrically assists an operating force applied to the steering wheel 39A by the driver. During automated driving of the work vehicle, the traveling direction is changed by steering using the assist mechanism controlled by a control device 70 (see FIG. 4).

The work vehicle 10 includes a traveling device 12 including the front wheels 12A and rear wheels 12B. The front wheels 12A and/or the rear wheels 12B are rotated by motive power from the motor 31. The front wheels 12A and/or the rear wheels 12B to be rotated by the motive power from the motor 31, i.e., the driving wheels may be crawlers (caterpillars). The traveling device 12 enables the vehicle main body 11 to travel.

### [Internal structure of work vehicle]

As illustrated in FIG. 3, the chassis 41 has a steel frame elongated in the front-rear direction, and includes a front frame 32 and a gear case 33. The gear case 33 is coupled to a rear portion of the front frame 32. The gear case 33 and the front frame 32 form a framework of the vehicle main body 11. The chassis 41 serves as a vehicle body frame on which the drive device 14, the driver's seat 15, the cabin 16, the tank 13, the fuel cell 24, and the like are installed.

The installation frame 17 for the tank unit 21 is coupled to the chassis 41. The installation frame 17 supports the tank unit 21 at a position above the cabin 16. The installation frame 17 includes: a ceiling frame 17A having an approximately rectangular shape whose longer sides extend in the front-rear direction and shorter sides extend in the left-right direction; a plurality of pillars 17B supporting the ceiling frame 17A from below; and a pair of left and right reinforcement frames 17C coupled to a front end portion of the ceiling frame 17A. The tank unit 21 is coupled to the ceiling frame 17A.

The battery unit 30 is supported on the vehicle main body 11 by a support frame 37 coupled to the chassis 41.

The gear case 33 is located rearward of the motor 31, and includes a power transmission mechanism. The power transmission mechanism includes a transmission, a clutch, and a differential gear, and reduces or increases rotation of an output shaft of the motor 31 to transmit the reduced or increased rotation to the traveling device 12.

The power transmission mechanism in the gear case 33 includes a branch mechanism configured to output part of the motive power from the motor 31 to a power take-off (PTO) shaft 334 (see FIG. 2). The PTO shaft 334 is an output shaft protruding from a rear portion of the gear case 33.

The work vehicle 10 includes a coupling device 43 (see FIG. 2) for coupling, to a rear end of the vehicle main body 11, a work device for performing desired farmwork. The work device is also referred to as an implement. Examples of the work device include a cultivator, a baler, and the like.

Rotational motion of the PTO shaft 334 is transmitted to an input shaft of the work device while, for example, the work vehicle 10 is traveling. The work vehicle 10 is capable of driving the work device using the motive power from the motor 31 while traveling in an agricultural field or the like.

### [Detection device 80]

FIG. 4 is a block diagram illustrating a part of a functional configuration of the work vehicle 10. The work vehicle 10 includes a detection device 80 configured to detect a condition around the vehicle main body 11, i.e., a travel condition. The detection device 80 is disposed on the vehicle main body 11. The detection device 80 of the work vehicle 10 includes at least one of a camera 81, a light detection and ranging (LiDAR) sensor 82, a microphone sensor 83, a millimeter-wave radar 84, and an ultrasonic sensor 85. A signal acquired by the detection device 80 is transmitted to the control device 70.

The work vehicle 10 may include, for example, a plurality of the cameras 81 respectively disposed on the front, rear, left, and right sides of the work vehicle 10 to capture images of an environment around the work vehicle 10. The camera 81 is, for example, a charge-coupled device (CCD) camera equipped with a CCD image sensor or a complementary metal oxide semiconductor (CMOS) camera equipped with a CMOS image sensor. The camera 81 includes a processing circuit configured to process a signal output from the image sensor, and the processing circuit acquires surrounding image information as detection information. The camera 81 serving as the detection device 80 is capable of detecting an obstacle around the vehicle main body 11.

The LiDAR sensor 82 is a three-dimensional ranging sensor. The LiDAR sensor 82 is disposed on, for example, a lower portion of a front surface of the vehicle main body 11. The LiDAR sensor 82 acquires and outputs sensor data indicating distances and directions of respective measurement points on surrounding objects, and sensor data indicating two-dimensional or three-dimensional coordinate values of the respective measurement points on the surrounding objects. Detection information (sensor data) of the LiDAR sensor 82 is used to detect an obstacle around the vehicle main body 11. In other words, the LiDAR sensor 82 serving as the detection device 80 is capable of detecting an obstacle around the vehicle main body 11.

The work vehicle 10 may include, for example, a plurality of the microphone sensors 83 respectively disposed on the front, rear, left, and right sides of the work vehicle 10 to detect obstacles around the vehicle main body 11 in a non-contact manner using sound waves. The work vehicle 10 may include, for example, a plurality of the millimeter-wave radars 84 respectively disposed on the front, rear, left, and right sides of the work vehicle 10 to detect obstacles around the vehicle main body 11 in a non-contact manner using millimeter waves. The work vehicle 10 may include, for example, a plurality of the ultrasonic sensors 85 respectively disposed on the front, rear, left, and right sides of the work vehicle 10 to detect obstacles around the vehicle main body 11 in a non-contact manner using ultrasonic waves.

The detection device 80 of the work vehicle 10 may include an inertia measurement device 77. The inertia measurement device 77 includes one or both of a 3-axis gyro sensor and a 3-axis acceleration sensor. At least one of a posture such as an inclination of the work vehicle 10 (vehicle main body 11), a vibration owing to a collision or the like, and an acceleration (acceleration/deceleration) can be detected based on a detection signal from the inertia measurement device 77. A signal acquired by the inertia measurement device 77 is transmitted to the control device 70.

As described above, the detection device 80, which includes at least one of the camera 81, the LiDAR sensor 82, the microphone sensor 83, the millimeter-wave radar 84, and the ultrasonic sensor 85, is capable of detecting an obstacle around the vehicle main body 11, as a travel condition (surrounding condition) of the vehicle main body 11.

The inertia measurement device 77 is capable of detecting, as the travel condition of the vehicle main body 11, at least one of a posture, a vibration, and an acceleration of the vehicle main body 11.

The control device 70 is capable of performing: travel control to perform control regarding travel of the vehicle main body 11; determination processing of estimating a danger to (an abnormality of) the vehicle main body 11, based on detection information of the detection device 80; and valve control processing of performing control to close the safety valve 60 (described later) when the danger to the vehicle main body 11 is estimated in the determination processing.

As used herein, the danger to (the abnormality of) the vehicle main body 11 refers to, for example, a situation in which the vehicle main body 11 collides with an obstacle, a situation in which the vehicle main body 11 nearly collides with an obstacle, a situation in which the vehicle main body 11 overturns, or a situation in which the vehicle main body 11 nearly overturns.

The work vehicle 10 includes a positioning device 76. The positioning device 76 receives satellite signals transmitted from a plurality of global navigation satellite system (GNSS) satellites, and performs positioning based on the satellite signals. The term "GNSS" is a general term for satellite positioning systems such as the Global Positioning System (GPS), the Quasi-Zenith Satellite System (QZSS) (e.g., "Michibiki"), GLONASS (Russia), Galileo (Europe), and BeiDou (China).

The positioning device 76 includes a receiver configured to receive satellite signals, and a processor (computing processor). The receiver includes an antenna configured to receive signals from the GNSS satellites. The processor calculates and determines a position (coordinates) of the work vehicle 10, based on a signal received by the antenna. Information indicating the position of the work vehicle 10 is transmitted to the control device 70 and used for automated driving and the like.

### [Driving modes of work vehicle 10]

The work vehicle 10 of the present embodiment has functions for executing both a manual driving mode with driver intervention and an automated driving mode without driver intervention. The work vehicle 10 is capable of automated driving and manual driving in a work site such as an agricultural field and on a road (farm road) outside the agricultural field.

Manual driving refers to driving that causes the work vehicle 10 to perform action (including travel) by manual operation of a driver sitting in the driver's seat 15 of the work vehicle 10.

Automated driving refers to driving that causes the work vehicle 10 to perform action (including travel) by a function of the control device 70 of the work vehicle 10, rather than the manual operation of the driver.

Automated driving is implemented by a function of a travel control unit 701 (described later) of the control device 70. The control device 70 may control at least one of steering necessary for movement of the work vehicle 10, adjustment of a moving speed, and a start and stop of the movement.

During automated driving, travel control on the work vehicle 10 and action control on a work implement (implement) are implemented without driver intervention. In other words, automatic work using the work implement is performed while the work vehicle 10 travels by automated driving.

The work vehicle 10 includes the positioning device 76 as described above. The control device 70 (travel control unit 701) causes the work vehicle 10 to travel by automated driving, based on a position of the work vehicle 10 identified by the positioning device 76 and a target route previously stored in a storage device of the control device 70.

Automated driving includes driving that causes the work vehicle 10 to travel autonomously while sensing the surrounding environment using the detection device 80, without human involvement in movement control on the work vehicle 10. Automated driving includes not only movement of the work vehicle 10 heading toward a destination along a predetermined route (the target route described above), but also movement of the work vehicle 10 following a tracking target. In the automated driving, the work vehicle 10 detects an obstacle, and performs avoidance travel as obstacle avoidance action.

A person different from the driver sitting in the driver's seat 15 is also able to drive the work vehicle 10 at a remote place. For this purpose, the work vehicle 10 includes a communication device (not illustrated). The work vehicle 10 is operated at a remote place through wireless communications between the work vehicle 10 and a management computer at a management office. Detection information of the detection device 80 is also used for travel of the work vehicle 10 operated at a remote place.

### [Fuel system and control system of work vehicle 10]

As illustrated in FIG. 4, the work vehicle 10 includes a fuel system FS and a control system SS. The fuel system FS includes, as the constituent elements, the tank 13, a valve unit 45, and the safety valve 60. The control system SS includes, as the constituent elements, the control device 70, the positioning device 76, the detection device 80, and an operating device 73. The operating device 73 is placed in, for example, the cabin 16, and includes buttons and the like to be operated by a user (e.g., the driver of the work vehicle 10, a worker, a person who is involved in agriculture).

The fuel system FS is described. The tank 13 is coupled to a first pipe 22A and a second pipe 22B via the valve unit 45. The first pipe 22A is a gas pipe connecting the filling port 42 and the valve unit 45 to guide hydrogen gas from the filling port 42 toward the tank 13. The second pipe 22B is a gas pipe connecting the fuel cell 24 and the valve unit 45 to guide hydrogen gas in the tank 13 toward the fuel cell 24.

The valve unit 45 is an assembly of valves such as an open-close valve and a reducing valve. The valve unit 45 adjusts a flow rate of hydrogen gas in the tank 13 and delivers the hydrogen gas to the fuel cell 24 in such a manner that action of each valve in the valve unit 45 is controlled. A hydrogen pipe 22C is provided between the valve unit 45 and the tank 13.

The safety valve 60 is in an open state at the time when the work vehicle 10 travels normally. The safety valve 60 is capable of, when entering a closed state, shutting off supply of hydrogen from the tank 13 to the fuel cell 24. The safety valve 60 is closed in response to a determination that the vehicle main body 11 is under a dangerous travel condition. In the present embodiment, the safety valve 60 is disposed on a pipe sleeve portion 131 of the tank 13. However, the safety valve 60 may be disposed on the valve unit 45. The pipe sleeve portion 131 constitutes a part of the tank 13 and serves as a tank connection portion to which the hydrogen pipe 22C is connected.

The tank 13 and the safety valve 60 are provided in one-to-one correspondence. The safety valve 60 is an electromagnetic valve openable and closable based on a control signal from the control device 70 (valve control unit 703). The safety valve 60 is configured to be closed when supply of electric power to the safety valve 60 is interrupted. In a state in which the work vehicle 10 travels normally, electric power is supplied to the safety valve 60 so that the safety valve 60 is in the open state. When the state (travel condition) of the work vehicle 10 becomes dangerous, the control device 70 interrupts supply of electric power to the safety valve 60.

The safety valve 60, which is disposed on the pipe sleeve portion 131, is capable of preventing leakage of hydrogen from the tank 13 even if the work vehicle 10 collides with an obstacle or overturns so that the pipes (first pipe 22A, second pipe 22B, hydrogen pipe 22C) connecting the tank 13 and the fuel cell 24 are damaged, for example.

The work vehicle 10 includes the detection device 80 disposed on the vehicle main body 11 as described above. The detection device 80 of the work vehicle 10 includes at least one of the camera 81, the LiDAR sensor 82, the microphone sensor 83, the millimeter-wave radar 84, and the ultrasonic sensor 85. The detection device 80 is capable of detecting an obstacle around the vehicle main body 11.

Detection information (sensor data) of the detection device 80 is transmitted to the control device 70. The control device 70 detects an obstacle around the work vehicle 10, using the detection information. While the vehicle main body 11 travels (by automated driving) based on the detection information of the detection device 80, the control device 70 can determine whether the vehicle main body 11 is under the dangerous travel condition, using the detection information detected by the detection device 80. When the control device 70 determines that the vehicle main body 11 is under the dangerous travel condition, the control device 70 closes the safety valve 60. In the present embodiment, moreover, when the control device 70 determines that the vehicle main body 11 is under the dangerous travel condition, the vehicle main body 11 performs action to avoid an obstacle or action to stop traveling. In the case where the work vehicle 10 travels by automated driving, the work vehicle 10 automatically detours an obstacle or stops traveling by canceling the automated driving.

### [System configuration of work vehicle 10]

The control device 70 is configured with a control unit (computer) including a processor (arithmetic processing unit) and a memory such as a random access memory (RAM) or a read-only memory (ROM). The control device 70 performs its functions in such a manner that the processor reads computer programs from the memory and executes the computer programs. The control device 70 may be configured with a single control unit (electronic control unit (ECU)), or may be configured with a plurality of control units. In a case where the control device 70 is configured with a plurality of control units, these control units are capable of exchanging information with each other.

The control device 70 includes the storage device such as a nonvolatile memory for storing various kinds of information. The storage device stores various computer programs for ensuring the functioning of the control unit. The storage device also stores map information and the like usable for automated driving.

In the present embodiment, the control device 70 includes the travel control unit 701, a determination unit 702, and the valve control unit 703 as functional units obtained in such a manner that the processor executes computer programs.

The travel control unit 701 performs control regarding travel of the vehicle main body 11. Specifically, the travel control unit 701 performs centralized control regarding travel, including automated travel, of the work vehicle 10. The travel control unit 701 is capable of performing control regarding automated driving. A specific example of automated driving will be described later.

The travel control unit 701 is also capable of performing control to cause the vehicle main body 11 to travel while detouring an obstacle around the work vehicle 10 (avoidance travel) or control to cause the vehicle main body 11 to stop traveling (travel stop). During performance of one of automated driving, remote driving, and manual driving, the travel control unit 701 interposes the avoidance travel and the travel stop in the performed one of automated driving, remote driving, and manual driving.

The determination unit 702 estimates a danger to (an abnormality of) the vehicle main body 11, based on detection information of the detection device 80.

In a case where the detection device 80 is the camera 81 or the LiDAR sensor 82, the detection device 80 acquires a distance from a position of the vehicle main body 11 to a position of an obstacle. The determination unit 702 acquires information on the distance (detected distance) as detection information. When the detected distance is less than or equal to a predetermined distance, the determination unit 702 estimates that the vehicle main body 11 is in danger. When the detected distance is more than the predetermined distance, the determination unit 702 estimates that the vehicle main body 11 is not in danger.

In a case where the detection device 80 is the microphone sensor 83, the millimeter-wave radar 84, or the ultrasonic sensor 85, the detection device 80 outputs, as detection information, information indicating that when a distance from the position of the vehicle main body 11 to the position of the obstacle becomes less than or equal to the predetermined distance, the vehicle main body 11 is approaching the obstacle (approach information). When the determination unit 702 acquires the approach information, the determination unit 702 estimates that the vehicle main body 11 is in danger. The vehicle main body 11 is not in danger insofar as the determination unit 702 does not acquire the approach information.

The valve control unit 703 performs control to close the safety valve 60 when the determination unit 702 estimates that the vehicle main body 11 is in danger. The valve control unit 703 is capable of performing the control to close the safety valve 60 not only when the vehicle main body 11 collides with an obstacle or overturns, but also before the vehicle main body 11 collides with an obstacle or overturns.

### [Action of work vehicle 10 in dangerous situation]

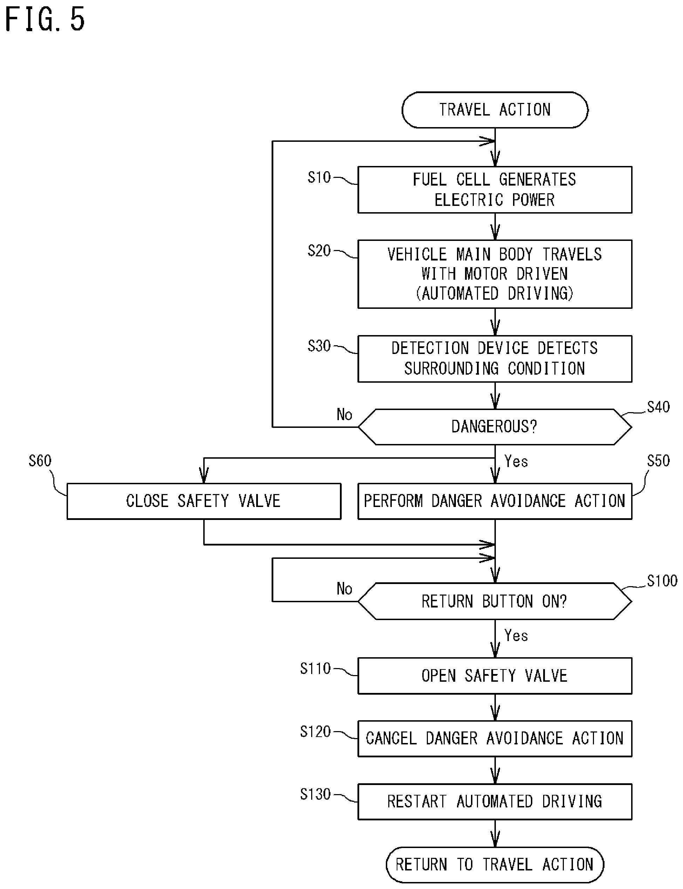

FIG. 5 is a flowchart illustrating action of the work vehicle 10.

The fuel cell 24 of the work vehicle 10 receives hydrogen gas supplied from the tank 13 and generates electric power (step S10). The vehicle main body 11 travels in such a manner that the motor 31 is driven using the electric power generated by the fuel cell 24 (step S20). In step S20, the vehicle main body 11 travels based on detection information detected by the detection device 80. For example, the vehicle main body 11 travels by automated driving based on detection information of the detection device 80 such as the camera 81 or the LiDAR sensor 82.

It is assumed in the following description that the vehicle main body 11 under automated driving approaches, for example, an obstacle such as a construct or a tree on a road or in an agricultural field and thus enters a dangerous state.

The detection device 80 detects an obstacle around the vehicle main body 11, as a travel condition of the vehicle main body 11. The detection device 80 is always in a state of detecting the surrounding condition while the vehicle main body 11 is traveling (step S30). The detection device 80 is, for example, at least one of the camera 81, the LiDAR sensor 82, the millimeter-wave radar 84, the ultrasonic sensor 85, and the microphone sensor 83.

When the detection device 80 detects an obstacle, the control device 70 obtains a distance between the obstacle and the vehicle main body 11, and compares the distance with a threshold value set in the control device 70. This comparison serves as a determination as to whether the vehicle main body 11 is under a dangerous travel condition (whether the vehicle main body 11 collides with an obstacle) (step S40).

When the distance between the obstacle detected by the detection device 80 and the vehicle main body 11 is less than or equal to a predetermined distance ("Yes" in step S40), the vehicle main body 11 performs action to avoid a danger (step S50). In other words, the vehicle main body 11 performs action to avoid the obstacle. Alternatively, the vehicle main body 11 performs action to stop traveling.

Specifically, the travel control unit 701 controls the steering device 39 to cause the vehicle main body 11 to detour the obstacle so as to avoid contact with the obstacle. Alternatively, the travel control unit 701 controls one or both of the motor 31 and the gear case 33 to cause the vehicle main body 11 to stop traveling.

In addition, when the distance between the obstacle and the vehicle main body 11 is less than or equal to the predetermined distance ("Yes" in step S40), the valve control unit 703 closes the safety valve 60 on the basis that the vehicle main body 11 is under the dangerous travel condition (step S60). In other words, supply of electric power to the safety valve 60 is interrupted. In this manner, the safety valve 60 is closed for danger prevention in response to the determination that the vehicle main body 11 is under the dangerous travel condition obtained from the detection information of the detection device 80.

As described above, while the vehicle main body 11 travels by automated driving based on detection information of the detection device 80 (steps S20 and S30), the detection information detected by the detection device 80 is used to determine whether the vehicle main body 11 is under the dangerous travel condition (step S40). When the vehicle main body 11 is under the dangerous travel condition, the safety valve 60, which is open at the time when the vehicle main body 11 travels normally, is closed (step S60).

It is assumed in the following description that, as an example, the vehicle main body 11 under automated driving travels on a road having an uneven slope and thus enters a dangerous state owing to a destabilized traveling posture, such as a state in which the vehicle main body 11 possibly overturns.

The detection device 80 detects a posture of the vehicle main body 11, i.e., an inclination angle of the vehicle main body 11. For this purpose, the detection device 80 that functions here includes the inertia measurement device 77 including one or both of a gyro sensor and an acceleration sensor, in addition to the camera 81 and the LiDAR sensor 82. While the vehicle main body 11 travels on a flat road, the inclination angle is zero. The inclination angle increases as the vehicle main body 11 tilts.

The fuel cell 24 of the work vehicle 10 receives hydrogen gas supplied from the tank 13 and generates electric power (step S10 of FIG. 5). The vehicle main body 11 travels in such a manner that the motor 31 is driven using the electric power generated by the fuel cell 24 (step S20). In step S20, the vehicle main body 11 travels based on detection information detected by the detection device 80. For example, the vehicle main body 11 travels by automated driving based on detection information of the detection device 80 such as the camera 81 or the LiDAR sensor 82.

The inertia measurement device 77 (detection device 80) detects, as the travel condition of the vehicle main body 11, at least one of a posture, a vibration, and an acceleration of the vehicle main body 11. The inertia measurement device 77 (detection device 80) always detects the posture and the like of the vehicle main body 11 while the vehicle main body 11 is traveling (step S30).

When the inclination angle (posture) of the vehicle main body 11 is detected, the control device 70 compares the inclination angle with the threshold value set in the control device 70. This comparison serves as a determination as to whether the vehicle main body 11 is under a dangerous travel condition (whether the vehicle main body 11 overturns) (step S40).

For example, when the vehicle main body 11 significantly tilts and, as a result, a possibility of rollover is estimated while the vehicle main body travels by automated driving ("Yes" in step S40), the safety valve 60, which is open at the time when the vehicle main body 11 travels normally, is closed (step S60). In other words, supply of electric power to the safety valve 60 is interrupted.

Further, the travel control unit 701 controls one or both of the motor 31 and the gear case 33 to cause the vehicle main body 11 to stop traveling, as danger avoidance action (step S50).

As described above, even in a case where the work vehicle 10 possibly collides with an obstacle or even in a case where the work vehicle 10 nearly overturns, while the vehicle main body 11 travels based on detection information of the detection device 80 (steps S20 and S30), the detection information detected by the detection device 80 is used to determine whether the vehicle main body is under the dangerous travel condition (step S40). When the vehicle main body 11 is under the dangerous travel condition, the safety valve 60, which is open at the time when the vehicle main body 11 travels normally, is closed (step S60). It is therefore possible to shut off supply of hydrogen gas from the tank 13 in advance. This configuration thus prevents leakage of hydrogen gas.

Return action of the safety valve 60 is described.

When the determination unit 702 estimates a danger to the vehicle main body 11, but thereafter determines, based on detection information of the detection device 80, that the vehicle main body 11 is not in danger, the valve control unit 703 opens the safety valve 60, which has been once closed. For example, when the determination unit 702 determines that there is no possibility of danger because the work vehicle 10 has performed the avoidance action, i.e., there is no possibility of collision, the valve control unit 703 returns the safety valve 60 to the open state. Alternatively, when the determination unit 702 determines that there is no possibility of rollover because the inclination angle has decreased thereafter, the valve control unit 703 returns the safety valve 60 to the open state.

Another example of the return action of the safety valve 60 is described.

As described above, the work vehicle 10 includes the operating device 73 disposed in the cabin 16 and operable by the user (the driver of the work vehicle 10) (see FIG. 4). The operating device 73 includes a return button. The user presses the return button after confirmation that the work vehicle 10 will not collide with an obstacle or will not overturn.

When the return button is pressed ("Yes" in step S100 of FIG. 5), the operating device 73 outputs a return signal to the control device 70 (travel control unit 701, valve control unit 703). When the control device 70 acquires the return signal from the operating device 73, the valve control unit 703 switches the safety valve 60 from the closed state to the open state (step S110). In other words, supply of electric power to the safety valve 60 causes the safety valve 60 to enter the open state.

In a case where the vehicle main body 11 is already performing the action to avoid the obstacle (step S50), when the safety valve 60 is switched from the closed state to the open state (step S110), the vehicle main body 11 cancels the action to avoid the obstacle (step S120). In other words, the avoidance action is interrupted. In the case of automated driving, operation to start the automated driving is performed again (step S130).

Alternatively, in a case where the vehicle main body 11 is already performing the action to stop traveling in order to avoid the obstacle (step S50), when the safety valve 60 is switched from the closed state to the open state (step S110), the vehicle main body 11 cancels the action to stop traveling (step S120). In other words, the vehicle main body 11 enters a standby state so that the vehicle main body 11 can restart traveling. In the case of automated driving, operation to start the automated driving is performed again (step S130).

As described above, when the travel control unit 701 acquires a signal from the operating device 73 operated by the user (step S120), the travel control unit 701 can perform control to cancel driving for danger avoidance and to return the vehicle main body 11 to the state in which the vehicle main body 11 can travel normally. In other words, once the safety is confirmed, the work vehicle 10 returns to the state before the control device 70 determines that the work vehicle 10 is in danger, based on the operation by the user.

As described above, the work vehicle 10 of the present embodiment includes the detection device 80 configured to detect the travel condition of the vehicle main body 11. The control device 70 of the work vehicle 10 is capable of performing: travel control processing of performing control regarding travel of the vehicle main body 11; determination processing of estimating a danger to (an abnormality of) the vehicle main body 11, based on detection information of the detection device 80; and valve control processing of performing control to close the safety valve 60 in response to an estimation in the determination processing that the vehicle main body 11 is in danger.

The travel control processing is performed by the travel control unit 701. The determination processing is performed by the determination unit 702. The valve control processing is performed by the valve control unit 703.

The travel control unit 701 is capable of performing control on automated driving of the vehicle main body 11, based on information from a sensor device installed on the vehicle main body 11. In the present embodiment, the sensor device includes the camera 81 and the LiDAR sensor 82. The sensor device (including the camera 81 and the LiDAR sensor 82) for automated driving functions as the detection device 80 and outputs detection information to the determination unit 702.

The camera 81 and the LiDAR sensor 82 (in the sensor device) for use in automated driving detect an obstacle around the vehicle main body 11 and a vehicle condition of the vehicle main body 11, as the travel condition of the vehicle main body 11. The determination unit 702 estimates a danger to the vehicle main body 11, based on detection information of the sensor device including the camera 81 and the LiDAR sensor 82. That is, for danger estimation, the sensor device for automated driving is utilized as the detection device 80. There is no need to additionally provide a dedicated sensor for danger estimation.

The sensor device has only to include at least one of the camera 81, the LiDAR sensor 82, the millimeter-wave radar 84, the ultrasonic sensor 85, and the microphone sensor 83. The sensor device functioning as the detection device 80 is capable of detecting an obstacle around the vehicle main body 11, as the travel condition.

As described above, when an obstacle is detected and a possibility of collision with the obstacle is estimated while the vehicle main body 11 travels by automated driving, the safety valve 60 is closed to shut off supply of hydrogen gas from the tank 13.

In a case where the sensor device installed on the vehicle main body 11 includes one or both of a gyro sensor and an acceleration sensor, i.e., in a case where the sensor device includes the inertia measurement device 77, the sensor device (including the inertia measurement device 77) functioning as the detection device 80 is capable of detecting, as the travel condition, at least one of a posture, a vibration, and an acceleration of the vehicle main body 11.

As described above, for example, when the vehicle main body 11 significantly tilts and a possibility of rollover is estimated while the vehicle main body travels by automated driving, the safety valve 60 is closed to shut off supply of hydrogen gas from the tank 13.

In the present embodiment, when a danger is estimated by the determination unit 702, the travel control unit 701 can perform driving control for danger avoidance (stop of traveling, stop of automated driving).

When a danger is estimated, supply of hydrogen from the tank 13 to the fuel cell 24 is shut off, and the work vehicle 10 can perform an emergency stop as driving for danger avoidance, for example. This configuration prevents the work vehicle 10 from colliding with an obstacle or overturning even if the work vehicle 10 nearly collides with the obstacle or nearly overturns.

### [Automated driving of work vehicle 10]

A specific example of automated driving is described.

The work vehicle 10 needs a target route for automated driving. The target route is generated before automated driving is started. The target route is generated by the control device 70 of the work vehicle 10. The target route may alternatively be generated by a computer of a management device rather than the work vehicle 10. In this case, the work vehicle 10 acquires information on the target route through a communication device.

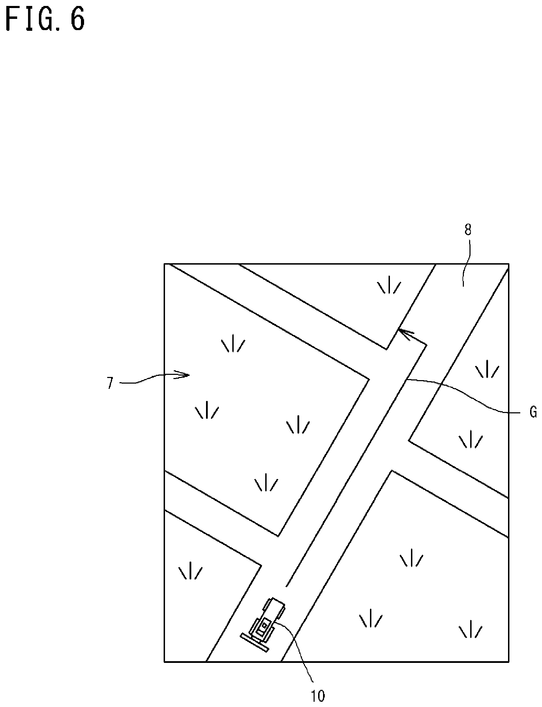

FIG. 6 is an explanatory diagram illustrating a state in which the work vehicle 10 travels by automated driving on a road 8 outside agricultural fields 7. In a case where the work vehicle 10 travels by automated driving on the road 8, the work vehicle 10 needs information on an environment map. The environment map is map information on an environment where the work vehicle 10 moves, and includes map information on, for example, the agricultural fields 7 and the road 8 for movement between the agricultural fields 7. A target route G is generated based on the map information. Specifically, when a destination is set in the map information, a route from a current position of the work vehicle 10 to the destination is generated as the target route G. In the example of FIG. 6, the target route G along the road 8 is generated. Information on the target route G is stored, together with the map information, in the storage device of the control device 70.

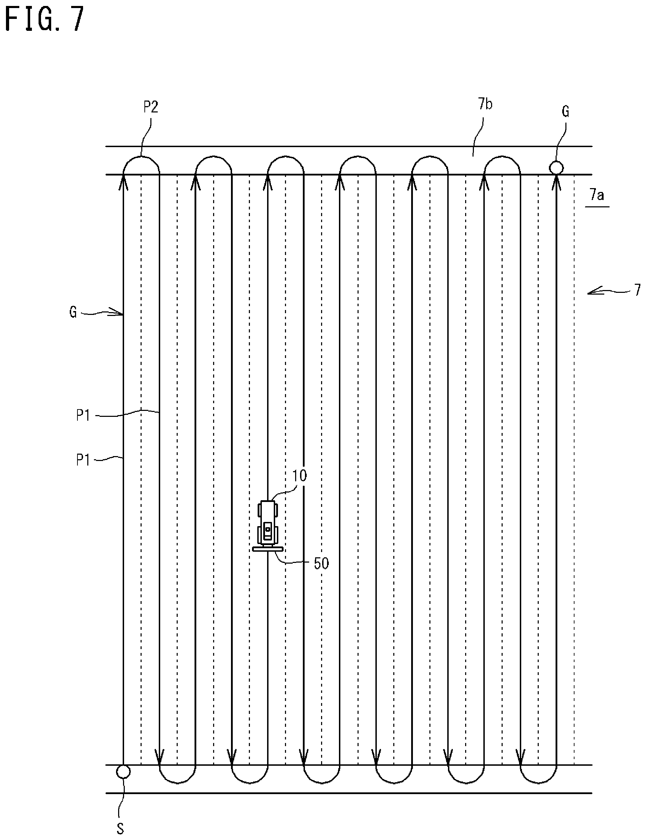

FIG. 7 is an explanatory diagram of a target route G when automated driving is performed in one of the agricultural fields 7. The agricultural field 7 includes a work area 7a where the work vehicle 10 performs work, and a headland 7b located near an outer peripheral edge of the agricultural field 7. Which area of the agricultural field 7 corresponds to the work area 7a or the headland 7b is set by a user.

The target route G in the agricultural field 7 includes a plurality of main routes P1 arranged in parallel and a turning route P2 connecting adjacent two of the main routes P1. The main routes P1 are located in the work area 7a, and the turning routes P2 are located in the headland 74. Although the main routes P1 illustrated in FIG. 7 are linear, the main routes P1 each may include a curved portion.

In FIG. 7, a distance between dashed lines represents a working width of a work implement (implement) 50. The working width is previously set and stored in the storage device of the control device 70. The working width is input to the control device 70 in such a manner that the user (driver) operates the operating device in the cabin 16. The working width may be automatically recognized and input to the control device 70 when the work implement 50 is connected to the work vehicle 10. A distance between adjacent two of the main routes P1 is set in accordance with the working width.

The target route G is prepared so as to pass (cover) the entire work area 7a. The work vehicle 10 travels from a work start point S to a work end point G by automated driving along the target route G while reciprocating repeatedly.

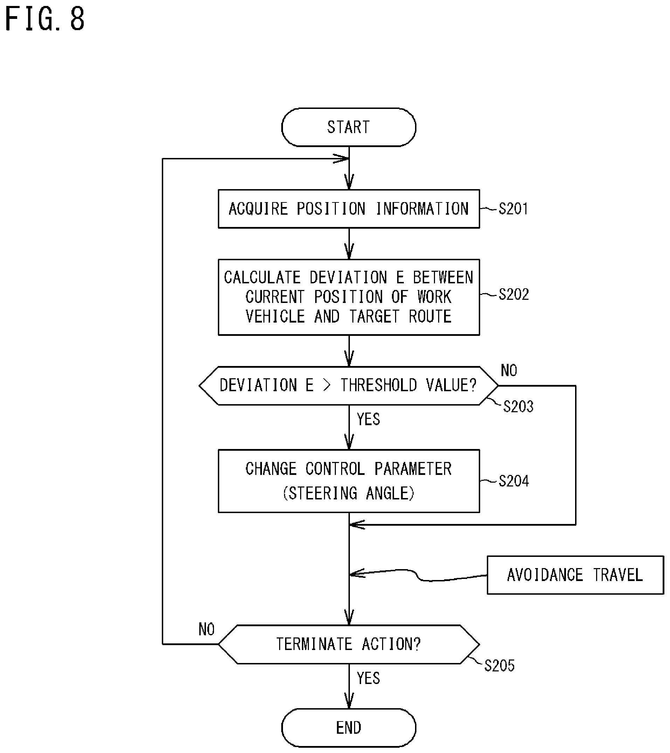

When the target route G outside of the agricultural field 7 or inside the agricultural field 7 is generated, automated driving can be performed. FIG. 8 is a flowchart illustrating an example of control for automated driving.

While the work vehicle 10 is traveling, the travel control unit 701 (see FIG. 4) performs automatic steering by performing the processing from step S201 to step S205 illustrated in FIG. 8. A traveling speed of the work vehicle 10 is maintained at a preset value, but may be automatically changed while the work vehicle 10 is traveling.

While the work vehicle 10 is traveling, the travel control unit 701 acquires position information of the work vehicle 10 obtained by the positioning device 76 (step S201). The position information indicates a current position of the work vehicle 10. The travel control unit 701 obtains a deviation E between the current position of the work vehicle 10 and the target route G (step S202).

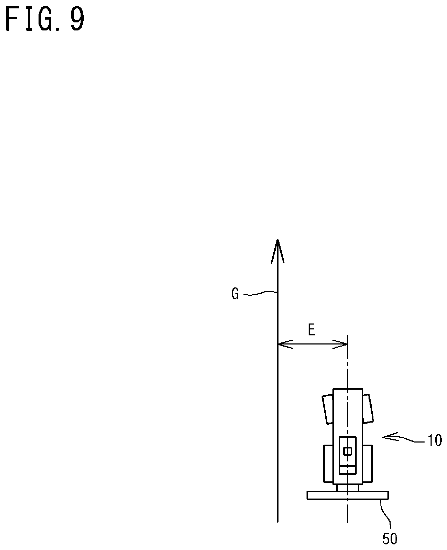

FIG. 9 is an explanatory diagram of the work vehicle 10 traveling by automated driving. The deviation E is a difference between the current position of the work vehicle 10 and the target route G and is, for example, a distance between the current position of the work vehicle 10 and the target route G. The travel control unit 701 determines whether the deviation E is more than a threshold value (step S203 of FIG. 8).

When the deviation E is more than the threshold value ("Yes" in step S203), the travel control unit 701 outputs a command signal to a control unit of the steering device 39 (see FIG. 2) in order to decrease the deviation E. Upon receiving the command signal, the steering device 39 changes a steering angle (step S204). The steering angle is changed until the deviation E becomes less than or equal to the threshold value.

When the deviation E is less than or equal to the threshold value in step S203, step S204 is skipped.

In the present embodiment (see FIG. 9), the steering device 39 is controlled based on the deviation E between the current position of the work vehicle 10 and the target route G; however, the steering device 39 may be controlled by further taking an azimuth deviation into account. For example, the travel control unit 701 determines whether an angular difference between an orientation of the work vehicle 10 identified by one or both of the positioning device 76 and the inertia measurement device 77 and a direction of the target route G is more than a preset threshold value. It should be noted that this angular difference is the azimuth deviation. When the angular difference is more than the threshold value, a control parameter (e.g., a steering angle) of the steering device 39 is changed in accordance with the deviation.

Step S205 of FIG. 8 is a step of determining whether the travel control unit 701 has received an action terminating command. The action terminating command is issued, for example, in the following cases.
(1) A manager (user) provides an instruction to stop automated driving by, for example, remote operation.
(2) The work vehicle 10 arrives at a destination (termination position).

When the travel control unit 701 does not receive the action terminating command ("No" in step S205), the processing returns to step S201, and thereafter the travel control unit 701 performs the same processing. The travel control unit 701 repeatedly performs the processing from step S201 to step S205 until receiving the action terminating command.

In any step between step S201 and step S205 for automated driving, as described above, when an obstacle is detected by the detection device 80, the travel control unit 701 can perform avoidance travel to avoid the obstacle.

Specifically, while the work vehicle 10 is traveling, the camera 81 serving as the detection device 80 captures an image of the surrounding environment, and the LiDAR sensor 82 serving as the detection device 80 senses an object around the vehicle main body 11. Based on detection information of the detection device 80, danger avoidance action can be performed (step S50 of FIG. 5). Then, the safety valve 60 is closed (step S60 of FIG. 5).

### [Others]

The foregoing embodiments are in all aspects illustrative and not restrictive. The scope of the present invention is defined by the claims rather than the foregoing embodiments, and includes all modifications within the scope of the configurations recited in the claims and their equivalences.

Reference signs used in Chapter 1 are used only in Chapter 1 and are not related to reference signs in other chapters.

### [Reference signs list]

- 10: work vehicle (work machine)
- 11: vehicle main body
- 13: tank
- 21: tank unit
- 24: fuel cell
- 60: safety valve (valve)
- 70: control device
- 73: operating device
- 80: detection device
- 82: LiDAR sensor
- 84: millimeter-wave radar
- 85: ultrasonic sensor
- 211: support member

### <Chapter 2>

### <Problem to be solved by the present invention>

According to the fuel cell system of Patent Literature 2, there is a possibility that an impact on the hydrogen tank cannot be detected accurately depending on a physical distance from the atmospheric pressure sensor to the hydrogen tank.

According to the fuel cell system of Patent Literature 2, in addition, there is a possibility that closing action is delayed due to a communication time lag, depending on a control signal transmission distance from a control device to the main shutoff valve.

In view of the conventional problems described above, a first object of the present disclosure is to provide a work vehicle and the like capable of accurately detecting an impact on a tank.

A second object of the present disclosure is to provide a work vehicle and the like capable of suppressing a delay from impact detection to valve closing action.

### <Advantageous effect of the present disclosure>

According to the present disclosure, it is possible to provide a work vehicle and the like capable of accurately detecting an impact on a tank.

According to the present disclosure, it is possible to provide a work vehicle and the like capable of suppressing a delay from impact detection to valve closing action.

### <Outline of embodiments of the present disclosure>

An outline of below-listed embodiments of the invention of the present disclosure is described.
(1) A work vehicle of the present embodiment is a work vehicle including: a vehicle body; a fuel cell installed on the vehicle body; and a tank unit including a tank capable of storing fuel, wherein the tank unit includes a casing accommodating the tank, and an impact sensor capable of detecting an impact applied to the casing.

Since the work vehicle of the present embodiment includes the impact sensor capable of detecting an impact applied to the casing accommodating the tank, a physical distance from the sensor to the tank can be shortened as compared with a case where the impact sensor is provided on, for example, the vehicle body of the work vehicle.

This configuration therefore improves accuracy in detecting an impact on a tank, and provides a work vehicle capable of accurately detecting the impact. This configuration thus achieves the first object.

(2) In the work vehicle described in (1), the tank unit may include: a pipe connected to the tank and configured to allow a flow of the fuel in a gaseous state discharged from the tank; and an open-close valve capable of shutting off the flow of the fuel in the gaseous state through the pipe, and the open-close valve may be closed when the impact sensor detects the impact.

According to this configuration, the open-close valve is automatically closed in response to detection of an impact. It is therefore possible to prevent leakage of gas from the tank.

(3) In the work vehicle described in (2), the casing may accommodate a plurality of the tanks, the pipe may include a main pipe and branch pipes branching off the main pipe and respectively communicating with the tanks, and the open-close valve may include at least one of a first valve disposed on the main pipe and second valves respectively disposed on the branch pipes.

This is because leakage of gas from the tank can be prevented by closing a flow of gas through at least one of the main pipe and all of the branch pipes.

(4) In the work vehicle described in any one of (1) to (3), the casing may include an outflow portion through which the fuel in the gaseous state flows out of the casing, and the pipe may include an outflow pipe connecting the tank and the outflow portion.

According to this configuration, since the outflow pipe connects the tank and the outflow portion, a supply path for the fuel in the gaseous state from the tank to the fuel cell is formed by connecting, to the outflow portion, an external pipe leading to the fuel cell.

(5) In the work vehicle described in any one of (1) to (4), the casing may include an inflow portion through which the fuel in the gaseous state flows into the tank, and the pipe may include an inflow pipe connecting the tank and the inflow portion.

According to this configuration, since the inflow pipe connects the tank and the inflow portion, the tank can be filled with hydrogen supplied from a hydrogen station, by connecting a coupler of the hydrogen station to the inflow portion.

(6) In the work vehicle described in any one of (1) to (5), the tank unit may include a control device configured to close the open-close valve in accordance with a detection signal of the impact sensor.

In this case, since the tank unit includes the control device configured to close the open-close valve, a communication time lag is reduced as compared with a case where another control device provided on, for example, the vehicle body of the work vehicle controls the impact sensor. It is therefore possible to provide a work vehicle capable of suppressing a delay from impact detection to valve closing action. This configuration thus achieves the second object.

(7) In the work vehicle described in (6), the control device may be connected to a communication port for external communication disposed on the casing.

In this case, connecting a communication cable, which is connected to another control device of the vehicle, to the communication port enables the control device of the tank unit to communicate with the other control device. It is therefore possible to exchange, for example, information necessary for controlling the fuel cell, with the other control device.

In a case where the other control device controls the open-close valve, the control device of the tank unit may transfer the detection signal of the impact sensor to the other control device, and the other control device, which has received the detection signal, may transfer a control command for the closing action to the control device of the tank unit.

(8) A tank unit of the present embodiment is a tank unit disposed on a work vehicle including a fuel cell serving as a drive source, the tank unit including: a tank configured to be capable of being filled with fuel to be supplied to the fuel cell; a casing accommodating the tank; and an impact sensor capable of detecting an impact applied to the casing.

Since the tank unit of the present embodiment includes the impact sensor capable of detecting an impact applied to the casing accommodating the tank, a physical distance from the sensor to the tank can be shortened as compared with a case where the impact sensor is provided on, for example, the vehicle body of the work vehicle.

This configuration therefore improves accuracy in detecting an impact on a tank, and provides a work vehicle capable of accurately detecting the impact. This configuration thus achieves the first object.

(9) The tank unit described in (8) may include: a pipe connected to the tank and configured to allow a flow of the fuel in a gaseous state discharged from the tank; and an open-close valve capable of shutting off the flow of the fuel in the gaseous state through the pipe, and the open-close valve may be closed when the impact sensor detects the impact.

According to this configuration, the open-close valve is automatically closed in response to detection of an impact. It is therefore possible to prevent leakage of gas from the tank.

(10) In the tank unit described in (9), the casing may accommodate a plurality of the tanks, the pipe may include a main pipe and branch pipes branching off the main pipe and respectively communicating with the tanks, and the open-close valve may include at least one of a first valve disposed on the main pipe and second valves respectively disposed on the branch pipes.

This is because leakage of gas from the tank can be prevented by closing a flow of fuel through at least one of the main pipe and all of the branch pipes.

### <Details of embodiments of the present disclosure>

Details of embodiments of the present disclosure are described below with reference to the drawings. It should be noted that at least some of the embodiments described below may be arbitrarily combined with each other.

### [Overall structure of work vehicle]

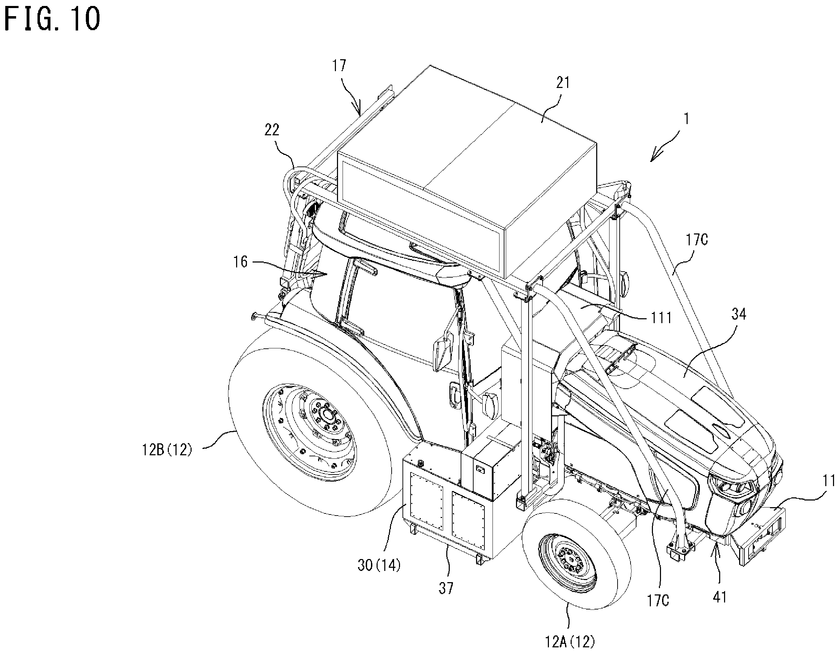

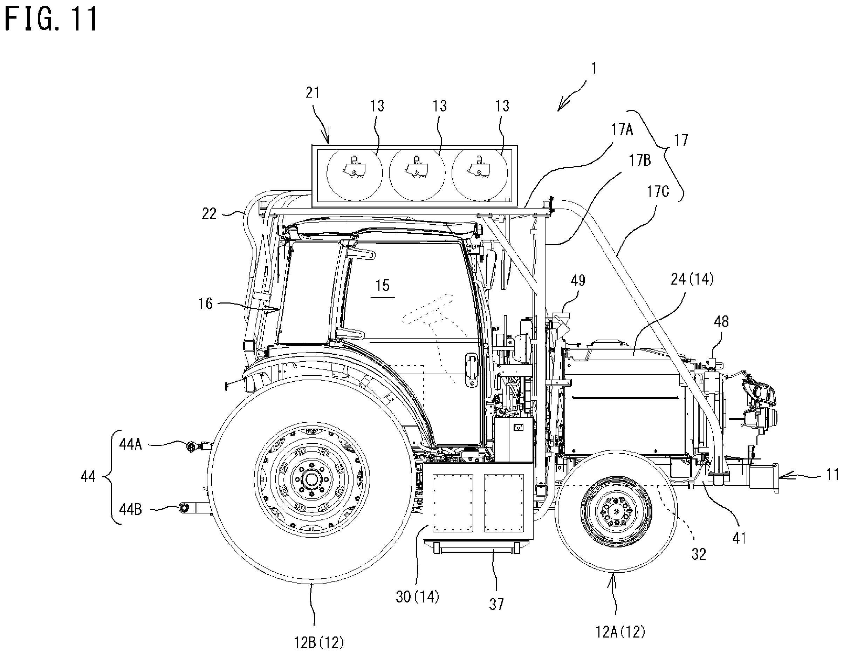

FIG. 10 is a perspective view illustrating an example of an overall structure of a work vehicle 1. FIG. 11 is a right side view of the work vehicle 1 from which some exterior components (such as a hood 34 and a cover 111) are removed.

As illustrated in FIGs. 10 and 11, the work vehicle 1 is a vehicle for use in farmwork, and is specifically a tractor. However, the work vehicle 1 is not limited to a tractor, and may be a movable body such as an agricultural machine, a construction machine, or a utility vehicle.

The work vehicle 1 includes a vehicle body 11, a traveling device 12 supporting the vehicle body 11, a driver's seat 15, a cabin 16, and the like. The vehicle body 11 includes a chassis 41, the hood 34, the cover 111, the cabin 16, fenders for rear wheels 12B, and the like.

Specifically, the hood 34 and the cover 111 are installed on the chassis 41 of the vehicle body 11, and the cabin 16 is disposed rearward of the cover 111. The hood 34, the cover 111, and the cabin 16 are arranged in this order from the front side to the rear side.

The work vehicle 1 also includes: a tank unit 21 including a plurality of tanks 13 (see FIG. 11) configured to store fuel; and a drive device 14 to be driven using the stored fuel.

The fuel is in a liquid or gaseous state, and examples of the fuel include hydrogen, methane, carbon monoxide (CO), and the like. In this embodiment, the tank 13 stores hydrogen gas.

The work vehicle 1 is an FCV. The work vehicle 1 includes a power generation system using a fuel cell (FC power generation system). The fuel cell 24 generates electric power using hydrogen. The fuel cell 24 may generate electric power using methane or carbon monoxide (CO).

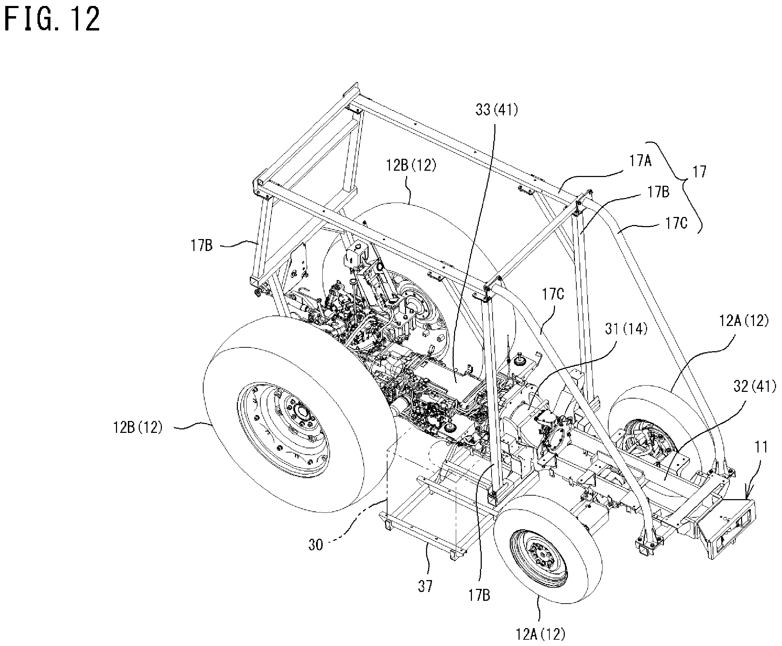

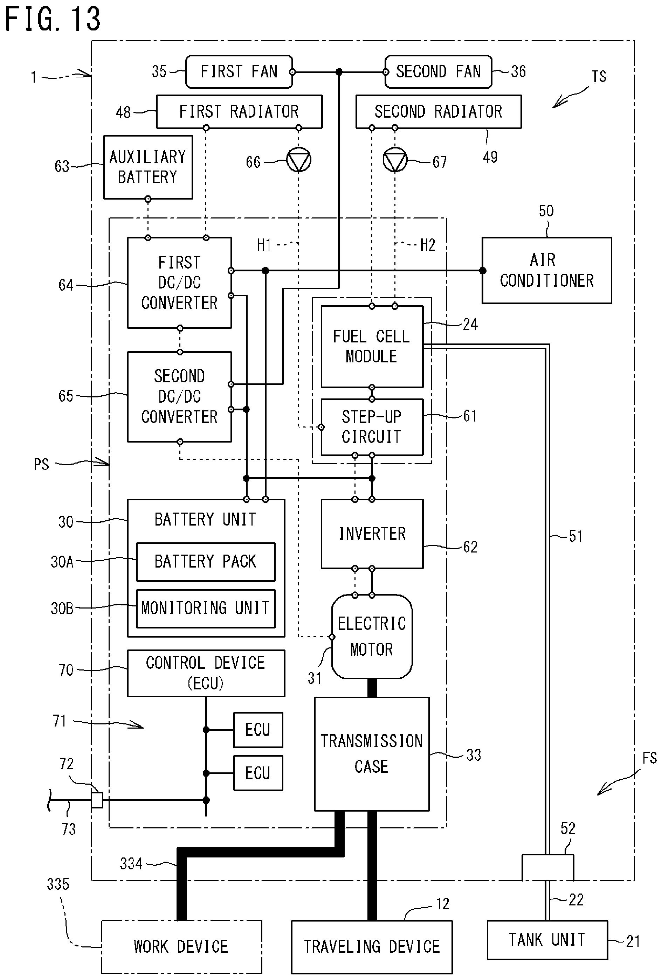

The drive device 14 includes a fuel cell 24, a battery unit 30, and an electric motor 31 (see FIG. 12; hereinafter also referred to as a "motor 31"). The battery unit 30 includes at least one battery pack 30A (see FIG. 13) configured to store output electric power from the fuel cell 24.

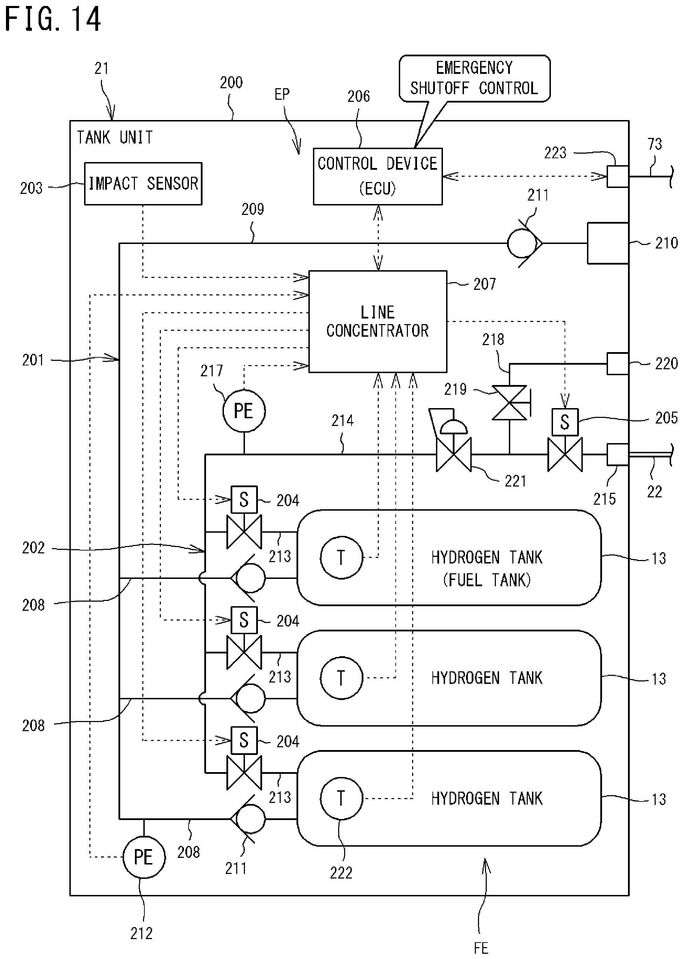

The work vehicle 1 includes an external pipe 22 for hydrogen gas. Hydrogen gas in each tank 13 is supplied to the fuel cell 24 through the external pipe 22. The tank 13 is filled with hydrogen gas supplied thereto from a gas filling connector 210 (see FIG. 14) of the tank unit 21.

The cabin 16 is a driver's cab partitioned by front pillars, rear pillars, and a roof. The front pillars are disposed leftward and rightward of a front side of the driver's seat 15, and the rear pillars are disposed leftward and rightward of a rear side of the driver's seat 15.

The work vehicle 1 may include, in place of the cabin 16, a canopy or a ROPS. If the work vehicle 1 does not include the cabin 16, the tank unit 21 is disposed above the driver's seat 15 by an installation frame 17 (described later).

The traveling device 12 includes front wheels 12A and the rear wheels 12B. The front wheels 12A and the rear wheels 12B are arranged left and right symmetrically with respect to the vehicle body 11. The front wheels 12A and/or the rear wheels 12B are rotated by motive power from the motor 31.

The front wheels 12A and/or the rear wheels 12B to be rotated by the motive power from the motor 31, i.e., the driving wheels may be crawlers (caterpillars).

As illustrated in FIG. 11, a first radiator 48, the fuel cell 24, and a second radiator 49 are installed on a portion of the chassis 41 corresponding to the front wheels 12A with the first radiator 48, the fuel cell 24, and the second radiator 49 arranged in this order from the front side to the rear side. The first radiator 48 and the fuel cell 24 are covered with the hood 34, and the second radiator 49 is covered with the cover 111.

As illustrated in FIG. 10, an upper surface of the cover 111 is higher in height than an uppermost end of the hood 34, but is lower in height than an uppermost end of a steering wheel in the driver's seat 15.

In addition, a rear end portion of the hood 34 is located lower than the cover 111, and an upper surface of the hood 34 has such a tapered shape that the height of the hood 34 gradually becomes lower from the rear end portion toward a front end portion. This configuration achieves a structure that is less likely to obstruct the forward field of view of the operator sitting in the driver's seat 15.

### [Internal structure of work vehicle]

FIG. 12 is a perspective view illustrating an example of an internal structure of the work vehicle 1.

As illustrated in FIG. 12, the chassis 41 constituting a part of the vehicle body 11 has a steel frame elongated in the front-rear direction, and includes a front frame 32 and a transmission case 33.

The transmission case 33 is coupled to a rear portion of the front frame 32. The transmission case 33 and the front frame 32 cooperate to form a framework of the vehicle body 11.

The installation frame 17 is coupled to the chassis 41, and the tank unit 21 is disposed above the cabin 16 by the installation frame 17.

The installation frame 17 includes: a ceiling frame 17A having an approximately rectangular shape whose longer sides extend in the front-rear direction and shorter sides extend in the left-right direction; a plurality of pillars 17B supporting the ceiling frame 17A from below; and a pair of left and right reinforcement frames 17C coupled to a front end portion of the ceiling frame 17A.

The tank unit 21 is coupled to the ceiling frame 17A in a transversely mounted state. As illustrated in FIG. 11, the ceiling frame 17A is located higher than the roof of the cabin 16. Therefore, the tank unit 21 is disposed above the roof of the cabin 16.

The reinforcement frames 17C are reinforcing diagonal members extending from a front end portion of the ceiling frame 17A to the front frame 32 so as to tilt downward. Therefore, the rigidity of the installation frame 17 in the front-rear direction is enhanced as compared with a case where the ceiling frame 17A and the tank unit 21 are supported only by the pillars 17B.

A support frame 37 is coupled to the chassis 41 of the work vehicle 1, and the battery unit 30 is supported on the vehicle body 11 by the support frame 37.

Specifically, the motor 31 is installed on the front frame 32 of the chassis 41, and the support frame 37 is mounted to a portion of the front frame 32 corresponding to the motor 31. The support frame 37 has, for example, a metal frame member, and is mounted to the front frame 32 in a cantilevered manner so as to protrude rightward from the front frame 32.

The transmission case 33 located rearward of the motor 31 includes a power transmission mechanism. The power transmission mechanism includes a transmission, a clutch, and a differential gear, and reduces or increases rotation of an output shaft of the motor 31 to transmit the reduced or increased rotation to the traveling device 12.

The power transmission mechanism in the transmission case 33 includes a branch mechanism configured to output part of the motive power from the motor 31 to a PTO shaft 334 (see FIG. 13). The PTO shaft 334 is an output shaft protruding rearward from the transmission case 33.

A coupling device 44 (see FIG. 11) includes, for example, a three-point linkage mechanism. The coupling device 44 is mounted to the transmission case 33 and used for coupling a work device 335 (see FIG. 13; also referred to as an "implement") for performing desired farmwork, to a rear portion of the vehicle body 11.

The three-point linkage mechanism may include, for example, an upper arm 44A protruding rearward from the transmission case 33 and a pair of left and right lower arms 44B. The work device 335 is, for example, a cultivator, a baler, or the like.

Rotational motion of the PTO shaft 334 is transmitted to an input shaft of the work device 335 coupled to the coupling device 44 while the traveling device 12 is driven, for example. Therefore, the work vehicle 1 is capable of driving the work device 335 using the motive power from the motor 31 while traveling in an agricultural field or the like.

### [Functional configuration of work vehicle]

FIG. 13 is a block diagram illustrating an example of a functional configuration of the work vehicle 1.

As illustrated in FIG. 13, the work vehicle 1 includes functional systems such as a fuel system FS, a power system PS, and a temperature control system TS.

The fuel system FS includes, as the constituent elements, an internal pipe 51, a gas coupler 52, the external pipe 22, the tank unit 21, and the like. The temperature control system TS includes, as the constituent elements, a plurality of radiators 48 and 49, an air conditioner 50, and the like.

The power system PS includes, as the constituent elements, the fuel cell 24, a step-up circuit 61, an inverter 62, the motor 31, the transmission case 33, DC/DC converters 64 and 65, the battery unit 30, and the like.

The internal pipe 51 is a gas pipe disposed inside the vehicle body 11. The internal pipe 51 has a proximal end connected to the fuel cell 24 and a distal end to which the gas coupler 52 is connected.

The external pipe 22 is a gas pipe disposed outside the vehicle body 11. The external pipe 22 has a proximal end connected to the gas coupler 52 and a distal end connected to a gas supply connector 215 (see FIG. 14) of the tank unit 21.

Therefore, hydrogen gas ejected from the tank unit 21 is supplied to the fuel cell 24 through the external pipe 22 and the internal pipe 51.

The motor 31 includes a rotor and a stator having a plurality of coils, and drives an output shaft at a predetermined torque and a predetermined rotational speed. For example, the work vehicle 1 includes only one motor 31, and an output shaft of the motor 31 is coupled to the transmission case 33.

The work vehicle 1 may include a plurality of motors 31. For example, in a case where two types of motors 31 are provided for the front wheels 12A and the rear wheels 12B, the motors 31 may output motive power to the corresponding front wheels 12A and rear wheels 12B.

The power transmission mechanism of the transmission case 33 outputs all or part of the motive power from the motor 31 to the traveling device 12. When actuating the work device 335, the power transmission mechanism also outputs the motive power from the motor 31 to the PTO shaft 334.

The fuel cell 24 is, for example, a battery module including a plurality of unit cells each having a positive electrode and a negative electrode and arranged and stacked in parallel. The fuel cell 24 collects electric power generated by the respective unit cells to generate electric power required to drive the motor 31.

The fuel cell 24 is connected to the second radiator 49 via a cooling flow path H2. That is, a temperature of an electrode is adjusted to a predetermined temperature using a circulating coolant supplied from the second radiator 49. The fuel cell 24 is thus capable of maintaining high electric power generation efficiency.

The fuel cell 24 is electrically connected to an input side of the step-up circuit 61, and an output side of the step-up circuit 61 is electrically connected to a direct-current side of the inverter 62. The step-up circuit 61 steps up a voltage of electric power supplied thereto from the fuel cell 24 and outputs the resultant electric power to the inverter 62 and the battery unit 30.

The inverter 62 is electrically connected to the motor 31. The inverter 62 converts the direct-current (DC) electric power received from the step-up circuit 61 into three-phase alternating-current (AC) electric power, and outputs the three-phase AC electric power to the motor 31. Therefore, electric power generated by the fuel cell 24 is stepped up and converted into AC electric power, and the AC electric power is then transmitted to the motor 31.

The battery unit 30 is a power storage device configured to absorb load fluctuations of the fuel cell 24. Specifically, the battery unit 30 temporarily charges electric power supplied from the step-up circuit 61, and discharges the stored electric power at a high load to supply drive electric power for the motor 31 to the inverter 62.

The battery unit 30 includes a battery pack 30A and a monitoring unit 30B. The battery pack 30A includes at least one cell. The cell is of a rechargeable type, such as a lithium-ion battery cell. An output voltage from the battery unit 30 is, for example, 24 V.

The monitoring unit 30B includes a processor configured to perform control to switch action (charge or discharge) of the battery pack 30A and measurement of a state of charge (e.g., SOC) in the battery pack 30A.

The monitoring unit 30B holds, for example, an SOC-open circuit voltage (OCV) curve defining a correspondence between an OCV and the SOC in the battery pack 30A. The processor of the monitoring unit 30B is capable of measuring the SOC of the battery pack 30A, based on the SOC-OCV curve and an OCV value detected by a voltage sensor (not illustrated).

The work vehicle 1 includes a plurality of electrical components operable at a voltage lower than a voltage at which the motor 31 operates. These electrical components receive DC electric power stepped down by a step-down circuit.

The plurality of electrical components include, for example, an auxiliary battery 63, the radiators 48 and 49, and the air conditioner 50. The step-down circuit includes, for example, the plurality of DC/DC converters 64 and 65 having different output voltages (hereinafter, also referred to as a "first converter 64" and a "second converter 65").

The first converter 64 steps down a DC voltage received from the step-up circuit 61 to a first voltage (e.g., 12 volts), and supplies the first voltage to the auxiliary battery 63, the air conditioner 50, and the like.

The second converter 65 steps down a DC voltage received from the step-up circuit 61 to a second voltage (e.g., 24 volts), and supplies the second voltage to the radiators 48 and 49. The inverter 62 and the two converters 64 and 65 are disposed on a portion of the chassis 41 corresponding to the driver's seat 15. The second voltage from the second converter 65 may be supplied to the battery unit 30.

As described above, the first radiator 48 is disposed forward of the fuel cell 24, and the second radiator 49 is disposed rearward of the fuel cell 24 (see FIG. 11).

These radiators 48 and 49 constitute a cooling system configured to cool, using a coolant (refrigerant), electrical components such as the fuel cell 24, the step-up circuit 61, the inverter 62, the motor 31, and the first and second converters 64 and 65.

The coolant is circulated by a pump 66 in a cooling flow path H1 connected to the first radiator 48, and is cooled by heat exchange with outside air. The first radiator 48 includes a first fan 35 for promoting the heat exchange with outside air.

Cooling targets by the first radiator 48 in the cooling flow path H1 include, for example, electrical components (heat-generating components) such as the step-up circuit 61, the inverter 62, the motor 31, and the first and second converters 64 and 65.

The coolant is circulated by a pump 67 in the cooling flow path H2 connected to the second radiator 49, and is cooled by heat exchange with outside air. The second radiator 49 includes a second fan 36 for promoting the heat exchange with outside air.

Cooling targets by the second radiator 49 in the cooling flow path H2 include, for example, electrical components such as the fuel cell 24.

The auxiliary battery 63 is a power storage device configured to supply electric power to a display, a communication appliance, and the like installed on the driver's seat 15. The auxiliary battery 63 is, for example, a rechargeable lead-acid battery. An output voltage from the auxiliary battery 63 is, for example, 12 V, which is lower than an output voltage (e.g., 24 V) from the battery unit 30.

The auxiliary battery 63 may also be used as an auxiliary power source configured to supply electric power to the control device 70 (described later) while the fuel cell 24 is stopped.

As illustrated in FIG. 13, an in-vehicle communication network 71 including, for example, at least one control device 70 and the like is constructed in the work vehicle 1. The control device 70 includes, for example, an electronic control unit (ECU) configured to communicate with various electrical components using a communication protocol such as a controller area network (CAN).

The in-vehicle communication network 71 is connected to, for example, a communication port 72 for establishing wired communication with an external device such as a control device 206 (see FIG. 14) of the tank unit 21 (described later).

A communication cable 73 compliant with a predetermined communication protocol for external communication is connected to the communication port 72. The communication cable 73 is connected to, for example, a communication port 223 (see FIG. 14) of the tank unit 21 (described later).

### [Internal configuration of tank unit]

FIG. 14 is a block diagram illustrating an example of an internal configuration of the tank unit 21.

As illustrated in FIG. 14, the tank unit 21 includes a casing 200, fuel devices FE accommodated in the casing 200, and electrical components EP accommodated in the casing 200.

The fuel devices FE include the plurality of hydrogen tanks 13 and pipes 201 and 202 connected to each hydrogen tank 13. The pipes 201 and 202 in the casing 200 include an inflow pipe 201 and an outflow pipe 202.

The electrical components EP include an impact sensor 203, electromagnetic valves 204 and 205, a control device 206, and a line concentrator 207. The electromagnetic valves 204 and 205 each function as an "open-close valve" configured to close or open a flow of gas in the pipes.

The casing 200 may be formed from a metal or synthetic resin housing having an approximately rectangular parallelepiped shape. The casing 200 is not limited to a housing having all wall surfaces sealed, and may be, for example, a housing or frame having a hole in at least one wall surface.

The plurality of tanks 13 include, for example, three hydrogen tanks 13. A temperature sensor 222 is attached to each tank 13. It should be noted that the number of hydrogen tanks 13 may be four or more, or may be two or less.

The inflow pipe 201 is a pipe for causing hydrogen to flow into the plurality of tanks 13.

The inflow pipe 201 includes branch pipes 208 respectively connected to the tanks 13, and one main pipe 209 to which all the branch pipes 208 are connected.

The main pipe 209 is connected to a gas filling connector 210 disposed on a wall portion of the casing 200. The gas filling connector 210 functions as an "inflow portion" configured to allow hydrogen to flow into each hydrogen tank 13.

The branch pipes 208 and the main pipe 209 are each provided with a check valve 211. One of the plurality of branch pipes 208 is provided with a pressure sensor 212 configured to detect a gas inflow pressure.

The outflow pipe 202 is a pipe for causing hydrogen to flow out of the plurality of tanks 13.

The outflow pipe 202 includes branch pipes 213 respectively connected to the tanks 13, and one main pipe 214 to which all the branch pipes 213 are connected.

The main pipe 214 is connected to a gas supply connector 215 fixed to the wall portion of the casing 200. The gas supply connector 215 functions as an "outflow portion" configured to allow hydrogen to flow out of the casing 200.

The branch pipes 213 are each provided with the electromagnetic valve 204, and the main pipe 214 is provided with the electromagnetic valve 205. The main pipe 214 is provided with a pressure sensor 217 configured to detect a gas outflow pressure.

A vent pipe 218 is openable by an open-close valve 219 and is connected to the main pipe 214 of the outflow pipe 202. The vent pipe 218 has a discharge end portion connected to a gas discharge port 220 disposed on the wall portion of the casing 200. The gas discharge port 220 may also be connected to a piping device capable of discharging hydrogen at, for example, a high location more safely.

The main pipe 214 of the outflow pipe 202 is provided with a pressure regulation valve 221 configured to adjust a pressure of hydrogen supplied from the tank 13.

The line concentrator 207 is, for example, a multi-port line concentrator for sensors and actuators. The line concentrator 207 bundles wires of multiple sensors and actuators into a single harness, and connects the harness to the control device 206 with a master cable. Therefore, the line concentrator 207 has ports to which the following cables are respectively connected.

(1) A sensor cable connected to the impact sensor 203
(2) A sensor cable connected to the pressure sensor 212
(3) A sensor cable connected to the pressure sensor 217
(4) A sensor cable connected to the temperature sensor 222
(5) Actuator cables connected to the electromagnetic valves 204
(6) An actuator cable to be connected to the electromagnetic valve 205

The control device 206 includes, for example, an ECU configured to communicate with various electrical components using a communication protocol such as a CAN. The control device 206 may communicate with sensors by serial communication such as the Single Edge Nibble Transmission (SENT).

The control device 206 is connected to the line concentrator 207 with the master cable, and is connected to the communication port 223 with a communication cable for external communication. The communication cable 73 leading to the vehicle-side communication port 72 (see FIG. 13) is connected to the communication port 223.

When the communication cable 73 is connected to the communication port 223 as described above, the control device 206 of the tank unit 21 serves as a communication node belonging to the in-vehicle communication network 71.

The control device 206 is therefore capable of exchanging information necessary for, for example, control of the fuel cell 24 with the other control device 70. For example, in response to an information request from the control device 70, the control device 206 calculates a filling amount of hydrogen gas from measurement values of the pressure sensors 212 and 217, and transmits to the control device 70 an information response including the calculated filling amount.

The impact sensor 203 is a sensor capable of detecting an impact on the casing 200. The impact sensor 203 may be, for example, at least one of an acceleration satellite sensor and a satellite pressure sensor.

The impact sensor 203 is placed on, for example, an inner surface of the wall portion of the casing 200. In the example of FIG. 14, the number of impact sensors 203 is one; however, a plurality of impact sensors 203 may be placed. In this case, the impact sensors 203 may be placed for respective directions in which impacts will be detected.

### [Emergency shutoff control by control device]

As illustrated in FIG. 14, the control device 206 of the tank unit 21 is capable of performing "emergency shutoff control". The emergency shutoff control is control to close the electromagnetic valves 204 and 205 in response to detection of an impact by the impact sensor 203.

Specifically, the control device 206 constantly monitors whether a value of a detection signal received from the impact sensor 203 is more than or equal to a predetermined threshold value. When the value of the detection signal becomes more than or equal to the threshold value, the control device 206 outputs a closing action control signal to the electromagnetic valves 204 and 205.

This configuration therefore prevents leakage of hydrogen from the outflow pipe 202 even when the casing 200 receives an impact.

Since the tank unit 21 of the present embodiment includes the impact sensor 203 capable of detecting an impact applied to the casing 200 accommodating the hydrogen tanks 13, a physical distance from the sensor to each hydrogen tank 13 can be shortened as compared with a case where the impact sensor 203 is provided on, for example, the vehicle body 11 of the work vehicle 1.

This configuration therefore improves accuracy in detecting an impact on each hydrogen tank 13, and provides the work vehicle 1 capable of accurately detecting the impact.

Further, according to the tank unit 21 of the present embodiment, since the control device 206 configured to close the electromagnetic valves 204 and 205 is installed in the tank unit 21, a communication time lag is reduced as compared with a case where the other control device 70 provided on, for example, the vehicle body 11 of the work vehicle 1 controls the impact sensor 203.

It is therefore possible to provide the work vehicle 1 capable of suppressing a delay from impact detection to valve closing action.

The present disclosure may employ a method of controlling the electromagnetic valves 204 and 205, using the vehicle-side control device 70.

In this case, the control device 206 of the tank unit 21 may transfer the detection signal of the impact sensor 203 to the vehicle-side control device 70, and this control device 70, which has received the detection signal, may transfer a control command for the closing action to the control device 206 of the tank unit 21.

However, the tank unit 21 usable for fuel cell-type agricultural machines or construction machines is installed at a variety of positions. Further, the tank unit 21 may be towed in some cases as will be described later. In view of such diversity of installation modes, preferably, the control device 206 and the impact sensor 203 are installed on the casing 200 of the tank unit 21.

In addition, with regard to off-road mobility, access to a hydrogen station is difficult. Therefore, the tank unit 21 may be replaceable as a standalone unit, and may have a variety of shapes. In this case, the impact sensor 203 can be placed at a position suitable for the internal structure of the tank unit 21 in such a manner that the impact sensor 203 and the control device 206 are accommodated in the casing 200.

### [Modification of work vehicle]

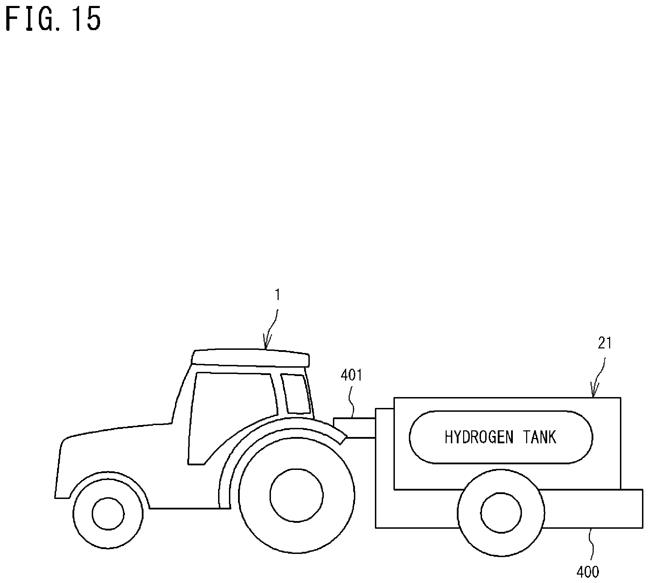

FIG. 15 is an explanatory diagram illustrating an example of a tow type work vehicle 1.

In the work vehicle 1 illustrated in FIG. 15, a coupling member 401 of a trailer 400 on which the tank unit 21 is loaded is detachably coupled to a rear portion of the vehicle.

As described above, the work vehicle 1 is not limited to an installation type (FIG. 10) in which the tank unit 21 is installed on the vehicle body 11, and may employ a configuration in which the work vehicle 1 tows the tank unit 21 by the trailer 400 or the like.

Also in the tow type work vehicle 1, hydrogen gas can be supplied to the fuel cell 24 by connecting the tank unit 21 and the work vehicle 1 with the external pipe 22.

Further, connecting the tank unit 21 and the in-vehicle communication network 71 with the communication cable 73 enables the control device 206 of the tank unit 21 to be included as a communication node in the network.

### [Other modifications]

The embodiments disclosed herein are in all respects illustrative and not restrictive. The scope of the present invention is not limited to the foregoing embodiments, and includes all modifications within the scope of the configurations recited in the claims and their equivalences.

For example, in the foregoing embodiments, the position where the tank unit 21 is installed is not limited to the position above the cabin 16, and the tank unit 21 may be installed sideward or rearward of the cabin 16, for example.

Reference signs used in Chapter 2 are used only in Chapter 2 and are not related to reference signs in other chapters.

The configurations disclosed in Chapter 1 are applicable to the invention disclosed in Chapter 2, and the configurations disclosed in Chapter 2 are applicable to the invention disclosed in Chapter 1.

### [Reference signs list]

- 1: work vehicle
- 11: vehicle body
- 12: traveling device
- 12A: front wheel
- 12B: rear wheel
- 12A, 12B: wheel
- 13: hydrogen tank (tank)
- 14: drive device
- 15: driver's seat
- 16: cabin
- 17: installation frame
- 17A: ceiling frame
- 17B: pillar
- 17C: reinforcement frame
- 21: tank unit
- 22: external pipe
- 24: fuel cell
- 30: battery unit
- 30A: battery pack
- 30B: monitoring unit
- 31: electric motor
- 31: motor
- 32: front frame
- 33: transmission case
- 34: hood
- 35: first fan
- 36: second fan
- 37: support frame
- 41: chassis
- 44: coupling device
- 44A: upper arm
- 44B: lower arm
- 48: first radiator
- 49: second radiator
- 50: air conditioner
- 51: internal pipe
- 52: gas coupler
- 61: step-up circuit
- 62: inverter
- 63: auxiliary battery
- 64: first converter
- 65: second converter
- 66: pump
- 67: pump
- 70: control device
- 71: in-vehicle communication network
- 72: communication port
- 73: communication cable
- 111: cover
- 200: casing
- 201: inflow pipe (pipe)
- 202: outflow pipe (pipe)
- 203: impact sensor
- 204: electromagnetic valve (open-close valve)
- 205: electromagnetic valve (open-close valve)
- 206: control device
- 207: line concentrator
- 208: branch pipe
- 209: main pipe
- 210: gas filling connector (inflow portion)
- 211: check valve
- 212: pressure sensor
- 213: branch pipe
- 214: main pipe
- 215: gas supply connector (outflow portion)
- 217: pressure sensor
- 218: vent pipe
- 219: open-close valve
- 220: gas discharge port
- 221: pressure regulation valve
- 222: temperature sensor
- 223: communication port
- 334: PTO shaft
- 335: work device
- 400: trailer
- 401: coupling member

## Claims

1. A work machine comprising:
a vehicle main body capable of travel;
a tank installed on the vehicle main body;
a fuel cell;
a valve capable of shutting off a supply path from the tank to the fuel cell; and
a detection device disposed on the vehicle main body,
wherein
the vehicle main body travels based on detection information of the detection device, and
the valve is closed in response to a determination that the vehicle main body is under a dangerous travel condition obtained from the detection information.

2. The work machine according to claim 1, wherein
the detection device is capable of detecting an obstacle around the vehicle main body,
when a distance between a position of the obstacle detected by the detection device and a position of the vehicle main body is less than or equal to a predetermined distance, the vehicle main body performs action to avoid the obstacle or action to stop traveling, and
when the distance between the position of the obstacle and the position of the vehicle main body is less than or equal to the predetermined distance, the valve is closed on a basis that the vehicle main body is under the dangerous travel condition.

3. The work machine according to claim 1 or 2, wherein
the detection device includes at least one of a light detection and ranging (LiDAR) sensor, a millimeter-wave radar, and an ultrasonic sensor, and
the valve is closed based on the detection information detected by at least one of the LiDAR sensor, the millimeter-wave radar, and the ultrasonic sensor.

4. The work machine according to any one of claims 1 to 3, wherein
the valve is switched from a closed state to an open state in response to a signal acquired from an operating device operated by a user.

5. The work machine according to claim 4, wherein
when the valve is switched from the closed state to the open state, the vehicle main body stops action to avoid the obstacle or action to stop traveling.

6. The work machine according to any one of claims 1 to 5, comprising
a tank unit including the tank and a support member supporting the tank,
wherein
the valve is disposed on the tank unit.

7. A work vehicle comprising:
a vehicle body;
a fuel cell installed on the vehicle body; and
a tank unit including a tank capable of storing fuel,
wherein
the tank unit includes:
a casing accommodating the tank; and
an impact sensor capable of detecting an impact applied to the casing.

8. The work vehicle according to claim 7, wherein
the tank unit includes:
a pipe connected to the tank and configured to allow a flow of the fuel in a gaseous state discharged from the tank; and
an open-close valve capable of shutting off the flow of the fuel in the gaseous state through the pipe, and
the open-close valve is closed when the impact sensor detects the impact.

9. The work vehicle according to claim 8, wherein
the casing accommodates a plurality of the tanks,
the pipe includes a main pipe and branch pipes branching off the main pipe and respectively communicating with the tanks, and
the open-close valve includes at least one of a first valve disposed on the main pipe and second valves respectively disposed on the branch pipes.

10. The work vehicle according to any one of claims 7 to 9, wherein
the casing includes an outflow portion through which the fuel in the gaseous state flows out of the casing, and
the pipe includes an outflow pipe connecting the tank and the outflow portion.

11. The work vehicle according to any one of claims 7 to 10, wherein
the casing includes an inflow portion through which the fuel in the gaseous state flows into the tank, and
the pipe includes an inflow pipe connecting the tank and the inflow portion.

12. The work vehicle according to any one of claims 7 to 11, wherein
the tank unit includes a control device configured to close the open-close valve in accordance with a detection signal of the impact sensor.

13. The work vehicle according to claim 12, wherein
the control device is connected to a communication port for external communication disposed on the casing.

14. A tank unit disposed on a work vehicle including a fuel cell serving as a drive source,
the tank unit comprising:
a tank configured to be capable of being filled with fuel to be supplied to the fuel cell;
a casing accommodating the tank; and
an impact sensor capable of detecting an impact applied to the casing.

15. The tank unit according to claim 14, comprising:
a pipe connected to the tank and configured to allow a flow of the fuel in a gaseous state discharged from the tank; and
an open-close valve capable of shutting off the flow of the fuel in the gaseous state through the pipe,
wherein
the open-close valve is closed when the impact sensor detects the impact.

16. The tank unit according to claim 15, wherein
the casing accommodates a plurality of the tanks,
the pipe includes a main pipe and branch pipes branching off the main pipe and respectively communicating with the tanks, and
the open-close valve includes at least one of a first valve disposed on the main pipe and second valves respectively disposed on the branch pipes.
